# EUROPEAN PATENT APPLICATION

(11) **EP 4 765 996 A1**
(43) Date of publication of application: **24.06.2026**
(21) Application number: 24890217.3
(22) Date of filing: 12.08.2024
(51) Int. Cl.: H04W 72/566

(54) **COMMUNICATION METHOD AND SYSTEM, AND RELATED DEVICE**

(30) Priority: 17.11.2023 CN 202311550847
(71) Applicant: Honor Device Co., Ltd., Shenzhen, Guangdong 518040 (CN)
(72) Inventor: ZHANG, Mingzhu, Shenzhen, Guangdong 518040 (CN)
(74) Representative: Isarpatent
(86) International application number: PCT/CN2024/111352
(87) International publication number: WO 2025/102853

(57) **Abstract**

Embodiments of this application provide a communication method and a related device, and may be applied to a case in which transmission conflicts with a measurement gap. In the method, first information is sent, where the first information is used to indicate one or more of the following: a priority of first data is higher than a priority of a measurement gap, a priority of a first channel is higher than the priority of the measurement gap, or a priority of a first resource is higher than the priority of the measurement gap. The measurement gap is related to a gap (GAP), or the measurement gap is understood as a measurement interval corresponding to a measurement GAP. A network device sends, to a terminal device, the first information related to the priority of the measurement gap, so that the terminal device can perform data transmission based on the first information, to address a conflict between the data transmission and the measurement gap.

## Description

This application claims priority to Chinese Patent Application No. 202311550847.2, filed with the China National Intellectual Property Administration on November 17, 2023 and entitled "COMMUNICATION METHOD AND SYSTEM, AND RELATED DEVICE", which is incorporated herein by reference in its entirety.

### TECHNICAL FIELD

This application relates to the communication field, and in particular, to a communication method and a related device.

### BACKGROUND

Wireless communication may be transmission and communication performed between two or more communication nodes without propagation through a conductor or a cable or propagation through an air interface. For example, the communication node includes a network device and a terminal device. Usually, the terminal device may access the network device, and receive scheduling and indication information from the network device, to implement wireless communication.

Currently, to perform measurement on a reference signal at a target frequency, the terminal device needs to tune a radio frequency from a serving cell to the target frequency, leading to interruption of data transmission of the serving cell. Therefore, the network device needs to configure a measurement gap (Measurement Gap, MG) for the terminal device. Within duration of the configured MG, no data is transmitted between the network device and the terminal device, to facilitate measurement on the reference signal. In addition, a periodicity of the MG is an integer periodicity.

However, some service data (for example, an extended reality service) has a non-integer periodicity. In this case, when a network configures the MG, overlapping with the service data inevitably occurs, leading to a conflict between the MG and transmission of the service data.

### SUMMARY

Embodiments of this application provide a communication method and a related device. A network device sends, to a terminal device, first information related to a priority of a measurement gap, so that the terminal device can perform data transmission based on the first information, to address a conflict between the data transmission and the measurement gap.

A first aspect of this application provides a communication method. The method is performed by a network device, or the method is performed by some components (for example, a processor, a chip, or a chip system) in a network device, or the method may be implemented by a logic module or software that can implement all or a part of functions of a network device. In the first aspect and possible implementations of the first aspect, an example in which the communication method is performed by the network device is used for description. In the method, first information is sent, where the first information is used to indicate one or more of the following: a priority of first data is higher than a priority of a measurement gap, a priority of a first channel is higher than the priority of the measurement gap, or a priority of a first resource is higher than the priority of the measurement gap. The measurement gap is related to a gap (GAP), or the MG is understood as a measurement interval corresponding to a measurement GAP.

In this embodiment of this application, the network device sends, to a terminal device, the first information related to the priority of the measurement gap, so that the terminal device can perform data transmission based on the first information, to address a conflict between the data transmission and the measurement gap.

Optionally, in a possible implementation of the first aspect, the method further includes: receiving second data, where a sending moment of the second data is within the measurement gap, and the second data satisfies one or more of the following: the second data is the first data, the second data is data in the first channel, or the second data is data on the first resource.

In this possible implementation, the network device may receive the second data sent by the terminal device within the measurement gap. That is, the measurement gap does not affect transmission of the second data. This can address a conflict between data transmission and the measurement gap. In addition, if the terminal device urgently needs to transmit the second data for a current service, the terminal device may transmit the second data within the measurement gap, to meet a user requirement and improve user experience.

Optionally, in a possible implementation of the first aspect, the method further includes: sending second information, where the second information is used to indicate to activate/release the first information, or indicate to activate/release priority-based data transmission, or indicate to activate/release a limitation of the measurement gap. The activating may also be understood as applying or using.

In this possible implementation, the network device may schedule, by using the second information, whether the terminal device is to transmit data within the measurement gap, to control data transmission of terminal devices.

A second aspect of this application provides a communication method. The method is performed by a terminal device, or the method is performed by some components (for example, a processor, a chip, or a chip system) in a terminal device, or the method may be implemented by a logic module or software that can implement all or a part of functions of a terminal device. In the second aspect and possible implementations of the second aspect, an example in which the communication method is performed by the terminal device is used for description. In the method, first information is obtained, where the first information is used to indicate one or more of the following: a priority of first data is higher than a priority of a measurement gap, a priority of a first channel is higher than the priority of the measurement gap, or a priority of a first resource is higher than the priority of the measurement gap.

In this embodiment of this application, the terminal device obtains the first information related to the priority of the measurement gap, so that the terminal device can perform data transmission based on the first information, to address a conflict between the data transmission and the measurement gap.

Optionally, in a possible implementation of the second aspect, the method further includes: obtaining second information, where the second information is used to indicate to activate/release the first information, or indicate to activate/release priority-based data transmission, or indicate to activate/release a limitation of the measurement gap.

In this possible implementation, the second information may be obtained, to determine whether to activate the first information and then determine whether to transmit data within the measurement gap.

Optionally, in a possible implementation of the second aspect, the method further includes:
generating transmission if the measurement gap overlaps with the transmission and the transmission includes second data, where
the second data satisfies one or more of the following: the second data includes the first data, the second data includes data in the first channel, or the second data includes data on the first resource.

In this possible implementation, the transmission is generated when the measurement gap overlaps with the transmission and the transmission includes the second data. To be specific, the second data may be transmitted within the measurement gap, and a transmission limitation of the measurement gap on the second data may be ignored.

Optionally, in a possible implementation of the second aspect, the first information is specifically used to indicate that the priority of the first data is higher than the priority of the measurement gap, and the first data is data transmitted through a second channel and/or a second resource. The method further includes: obtaining a first parameter, where the first parameter is used to indicate the second channel and/or the second resource.

In this possible implementation, when the first information is specifically used to indicate that the priority of the first data is higher than the priority of the measurement gap, the terminal device may further obtain the first parameter to determine a channel and/or a resource used for the first data.

Optionally, in a possible implementation of the first aspect or the second aspect, the first information is specifically used to indicate that the priority of the first channel and/or the priority of the first resource are/is higher than the priority of the measurement gap; and the first information specifically indicates the first channel and/or the first resource in a first manner, the first manner includes one or more of the following: a bit mapping manner, an identifier indication manner, or an indication information manner, and the indication information manner includes an enumeration manner or a Boolean format.

In this possible implementation, a priority of a channel or a resource and the priority of the measurement gap may be indicated in a plurality of manners, to enable the terminal device to determine how to transmit data.

Optionally, in a possible implementation of the first aspect or the second aspect, the first information specifically indicates the first channel in the bit mapping manner, the first information includes N bits, the first channel includes N channels, the N bits are respectively in a one-to-one correspondence with the N channels, a priority of a channel corresponding to a bit among the N bits that is a first value is higher than the priority of the measurement gap, a priority of a channel corresponding to a bit among the N bits that is a second value is lower than the priority of the measurement gap, and N is an integer greater than 0.

In this possible implementation, the first information indicates, in the bit mapping manner, channels whose priorities are higher than the priority of the measurement gap, so that a receive end (for example, the terminal device) determines a channel with a high priority, to generate transmission.

Optionally, in a possible implementation of the first aspect or the second aspect, the first information specifically indicates the first resource in the bit mapping manner, the first information includes M bits, the first resource includes M resources, the M bits are respectively in a one-to-one correspondence with the M resources, a priority of a resource corresponding to a bit among the M bits that is a third value is higher than the priority of the measurement gap, a priority of a resource corresponding to a bit among the M bits that is a fourth value is lower than the priority of the measurement gap, and M is an integer greater than 0.

In this possible implementation, the first information indicates, in the bit mapping manner, resources whose priorities are higher than the priority of the measurement gap, so that a receive end (for example, the terminal device) determines a resource with a high priority, to generate transmission.

Optionally, in a possible implementation of the first aspect or the second aspect, the first information specifically indicates the first channel in the identifier indication manner, the first information includes an identifier of the first channel, and a priority of a first channel corresponding to the identifier of the first channel is higher than the priority of the measurement gap.

In this possible implementation, the network device directly indicates, by using channel identifiers, channels whose priorities are higher than the priority of the measurement gap, so that a receive end (for example, the terminal device) determines a channel with a high priority, to generate transmission.

Optionally, in a possible implementation of the first aspect or the second aspect, the first information specifically indicates the first resource in the identifier indication manner, the first information includes an identifier of the first resource, and a priority of a first resource corresponding to the identifier of the first resource is higher than the priority of the measurement gap.

In this possible implementation, the network device directly indicates, by using channel identifiers, resources whose priorities are higher than the priority of the measurement gap, so that a receive end (for example, the terminal device) determines a resource with a high priority, to generate transmission.

Optionally, in a possible implementation of the first aspect or the second aspect, a type of the first information includes a retention type or a release type, the retention type is used for the terminal device to save the first information when a field related to the first information does not exist, and the release type is used for the terminal device to release the first information when a field related to the first information does not exist.

In this possible implementation, the network device may flexibly schedule the first information related to the priority of the measurement gap by setting the type of the first information, to flexibly schedule receive ends.

Optionally, in a possible implementation of the first aspect or the second aspect, the first information is configured in configuration information of the first resource.

In this possible implementation, the network device may configure the first information in the configuration information of the first resource, to reduce communication overheads of redundant signaling.

Optionally, in a possible implementation of the first aspect or the second aspect, the first channel has a mapping relationship with the first resource.

In this possible implementation, data of the first channel is mapped to the first resource, to enable the terminal device to subsequently generate transmission.

Optionally, in a possible implementation of the first aspect or the second aspect, the first channel includes one or more of the following: a logical channel, a protocol data unit PDU set, a radio bearer RB, or a quality of service QoS flow; and the first resource includes one or more of the following: an uplink resource or a downlink resource.

In this possible implementation, a plurality of possible channels and/or resources are provided, to expand an application scope of the solution.

Optionally, in a possible implementation of the first aspect or the second aspect, the first information is specifically used to indicate that the priority of the first data is higher than the priority of the measurement gap, and the first data is data transmitted through a second channel and/or a second resource. The method further includes: configuring a first parameter for the terminal device, where the first parameter is used to indicate the second channel and/or the second resource.

In this possible implementation, when the first information is specifically used to indicate that the priority of the first data is higher than the priority of the measurement gap, the first parameter may be further introduced to define a channel and/or a resource used for the first data.

Optionally, in a possible implementation of the first aspect or the second aspect, the first parameter specifically indicates the second channel and/or the second resource in a first manner, the first manner includes one or more of the following: a bit mapping manner, an identifier indication manner, or an indication information manner, and the indication information manner includes an enumeration manner or a Boolean format.

In this possible implementation, a channel and/or a resource to which data belongs may be defined in a plurality of manners, to enable the terminal device to determine how to transmit the data.

Optionally, in a possible implementation of the first aspect or the second aspect, the first parameter specifically indicates the second channel in the bit mapping manner, the first parameter includes N bits, the second channel includes N channels, the N bits are respectively in a one-to-one correspondence with the N channels, a priority of first data in a channel corresponding to a bit among the N bits that is a first value is higher than the priority of the measurement gap, a priority of first data in a channel corresponding to a bit among the N bits that is a second value is lower than the priority of the measurement gap, and N is an integer greater than 0.

In this possible implementation, the first parameter indicates, in the bit mapping manner, channels in which priorities of data are higher than the priority of the measurement gap, so that a receive end (for example, the terminal device) determines a channel to be used for data with a high priority, to generate transmission.

Optionally, in a possible implementation of the first aspect or the second aspect, the first parameter specifically indicates the second resource in the bit mapping manner, the first parameter includes M bits, the second resource includes M resources, the M bits are respectively in a one-to-one correspondence with the M resources, a priority of first data on a resource corresponding to a bit among the M bits that is a third value is higher than the priority of the measurement gap, a priority of first data on a resource corresponding to a bit among the M bits that is a fourth value is lower than the priority of the measurement gap, and M is an integer greater than 0.

In this possible implementation, the first parameter indicates, in the bit mapping manner, resources on which priorities of data are higher than the priority of the measurement gap, so that a receive end (for example, the terminal device) determines a resource to be used for data with a high priority, to generate transmission.

Optionally, in a possible implementation of the first aspect or the second aspect, the second channel has a mapping relationship with the second resource.

In this possible implementation, data of the second channel is mapped to the second resource, to enable the terminal device to subsequently generate transmission.

Optionally, in a possible implementation of the first aspect or the second aspect, the second channel includes one or more of the following: a logical channel, a protocol data unit PDU set, a radio bearer RB, or a quality of service QoS flow; and the second resource includes one or more of the following: an uplink resource or a downlink resource.

In this possible implementation, a plurality of possible channels and/or resources are provided, to expand an application scope of the solution.

A third aspect of this application provides a communication apparatus. The apparatus is a network device, or the apparatus is some components (for example, a processor, a chip, or a chip system) in a network device, or the apparatus is a logic module or software that can implement all or a part of functions of a network device. The communication apparatus includes a transceiver unit.

The transceiver unit is configured to send first information, where the first information is used to indicate one or more of the following: a priority of first data is higher than a priority of a measurement gap, a priority of a first channel is higher than the priority of the measurement gap, or a priority of a first resource is higher than the priority of the measurement gap. The measurement gap is related to a gap (GAP), or the MG is understood as a measurement interval corresponding to a measurement GAP.

Optionally, in a possible implementation of the third aspect, the transceiver unit is further configured to receive second data, where a sending moment of the second data is within the measurement gap, and the second data satisfies one or more of the following: the second data is the first data, the second data is data in the first channel, or the second data is data on the first resource.

Optionally, in a possible implementation of the third aspect, the transceiver unit is further configured to send second information, where the second information is used to indicate to activate/release the first information, or indicate to activate/release priority-based data transmission, or indicate to activate/release a limitation of the measurement gap. The activating may also be understood as applying or using.

A fourth aspect of this application provides a communication apparatus. The apparatus is a terminal device, or the apparatus is some components (for example, a processor, a chip, or a chip system) in a terminal device, or the apparatus is a logic module or software that can implement all or a part of functions of a terminal device. The communication apparatus includes a transceiver unit.

The transceiver unit is configured to obtain first information, where the first information is used to indicate one or more of the following: a priority of first data is higher than a priority of a measurement gap, a priority of a first channel is higher than the priority of the measurement gap, or a priority of a first resource is higher than the priority of the measurement gap.

Optionally, in a possible implementation of the fourth aspect, the transceiver unit is further configured to obtain second information, where the second information is used to indicate to activate/release the first information, or indicate to activate/release priority-based data transmission, or indicate to activate/release a limitation of the measurement gap.

Optionally, in a possible implementation of the fourth aspect, the transceiver unit is further configured to generate transmission if the measurement gap overlaps with the transmission and the transmission includes second data, where the second data satisfies one or more of the following: the second data includes the first data, the second data includes data in the first channel, or the second data includes data on the first resource.

Optionally, in a possible implementation of the fourth aspect, the first information is specifically used to indicate that the priority of the first data is higher than the priority of the measurement gap, and the first data is data transmitted through a second channel and/or a second resource. The method further includes: obtaining a first parameter, where the first parameter is used to indicate the second channel and/or the second resource.

Optionally, in a possible implementation of the third aspect or the fourth aspect, the first information is specifically used to indicate that the priority of the first channel and/or the priority of the first resource are/is higher than the priority of the measurement gap; and the first information specifically indicates the first channel and/or the first resource in a first manner, the first manner includes one or more of the following: a bit mapping manner, an identifier indication manner, or an indication information manner, and the indication information manner includes an enumeration manner or a Boolean format.

Optionally, in a possible implementation of the third aspect or the fourth aspect, the first information specifically indicates the first channel in the bit mapping manner, the first information includes N bits, the first channel includes N channels, the N bits are respectively in a one-to-one correspondence with the N channels, a priority of a channel corresponding to a bit among the N bits that is a first value is higher than the priority of the measurement gap, a priority of a channel corresponding to a bit among the N bits that is a second value is lower than the priority of the measurement gap, and N is an integer greater than 0.

Optionally, in a possible implementation of the third aspect or the fourth aspect, the first information specifically indicates the first resource in the bit mapping manner, the first information includes M bits, the first resource includes M resources, the M bits are respectively in a one-to-one correspondence with the M resources, a priority of a resource corresponding to a bit among the M bits that is a third value is higher than the priority of the measurement gap, a priority of a resource corresponding to a bit among the M bits that is a fourth value is lower than the priority of the measurement gap, and M is an integer greater than 0.

Optionally, in a possible implementation of the third aspect or the fourth aspect, the first information specifically indicates the first channel in the identifier indication manner, the first information includes an identifier of the first channel, and a priority of a first channel corresponding to the identifier of the first channel is higher than the priority of the measurement gap.

Optionally, in a possible implementation of the third aspect or the fourth aspect, the first information specifically indicates the first resource in the identifier indication manner, the first information includes an identifier of the first resource, and a priority of a first resource corresponding to the identifier of the first resource is higher than the priority of the measurement gap.

Optionally, in a possible implementation of the third aspect or the fourth aspect, a type of the first information includes a retention type or a release type, the retention type is used for the terminal device to save the first information when a field related to the first information does not exist, and the release type is used for the terminal device to release the first information when a field related to the first information does not exist.

Optionally, in a possible implementation of the third aspect or the fourth aspect, the first information is configured in configuration information of the first resource.

Optionally, in a possible implementation of the third aspect or the fourth aspect, the first channel has a mapping relationship with the first resource.

Optionally, in a possible implementation of the third aspect or the fourth aspect, the first channel includes one or more of the following: a logical channel, a protocol data unit PDU set, a radio bearer RB, or a quality of service QoS flow; and the first resource includes one or more of the following: an uplink resource or a downlink resource.

Optionally, in a possible implementation of the third aspect or the fourth aspect, the first information is specifically used to indicate that the priority of the first data is higher than the priority of the measurement gap, and the first data is data transmitted through a second channel and/or a second resource. The method further includes: configuring a first parameter for the terminal device, where the first parameter is used to indicate the second channel and/or the second resource.

Optionally, in a possible implementation of the third aspect or the fourth aspect, the first parameter specifically indicates the second channel and/or the second resource in a first manner, the first manner includes one or more of the following: a bit mapping manner, an identifier indication manner, or an indication information manner, and Third indication information manner includes an enumeration manner or a Boolean format.

Optionally, in a possible implementation of the third aspect or the fourth aspect, the first parameter specifically indicates the second channel in the bit mapping manner, the first parameter includes N bits, the second channel includes N channels, the N bits are respectively in a one-to-one correspondence with the N channels, a priority of first data in a channel corresponding to a bit among the N bits that is a first value is higher than the priority of the measurement gap, a priority of first data in a channel corresponding to a bit among the N bits that is a second value is lower than the priority of the measurement gap, and N is an integer greater than 0.

Optionally, in a possible implementation of the third aspect or the fourth aspect, the first parameter specifically indicates the second resource in the bit mapping manner, the first parameter includes M bits, the second resource includes M resources, the M bits are respectively in a one-to-one correspondence with the M resources, a priority of first data on a resource corresponding to a bit among the M bits that is a third value is higher than the priority of the measurement gap, a priority of first data on a resource corresponding to a bit among the M bits that is a fourth value is lower than the priority of the measurement gap, and M is an integer greater than 0.

Optionally, in a possible implementation of the third aspect or the fourth aspect, the second channel has a mapping relationship with the second resource.

Optionally, in a possible implementation of the third aspect or the fourth aspect, the second channel includes one or more of the following: a logical channel, a protocol data unit PDU set, a radio bearer RB, or a quality of service QoS flow; and the second resource includes one or more of the following: an uplink resource or a downlink resource.

A fifth aspect of this application provides a communication method. The method is performed by a network device, or the method is performed by some components (for example, a processor, a chip, or a chip system) in a network device, or the method may be implemented by a logic module or software that can implement all or a part of functions of a network device. In the fifth aspect and possible implementations of the fifth aspect, an example in which the communication method is performed by the network device is used for description. In the method, the network device sends second information, where the second information is used to indicate to activate/release priority-based data transmission, or indicate to activate/release a limitation of a measurement gap.

In this embodiment of this application, the network device sends, to a terminal device, the second information related to a priority of the measurement gap, so that the terminal device can determine a priority based on the second information, to implement data transmission, to address a conflict between the data transmission and the measurement gap.

Optionally, in a possible implementation of the fifth aspect, the method further includes: receiving second data, where the second data satisfies one or more of the following: a priority of the second data is higher than the priority of the measurement gap, a priority of a channel used for the second data is higher than the priority of the measurement gap, or a priority of a resource used for the second data is higher than the priority of the measurement gap.

In this possible implementation, the network device may transmit the second data within the measurement gap of the terminal device, and a transmission limitation of the measurement gap on the second data may be ignored.

A sixth aspect of this application provides a communication method. The method is performed by a terminal device, or the method is performed by some components (for example, a processor, a chip, or a chip system) in a terminal device, or the method may be implemented by a logic module or software that can implement all or a part of functions of a terminal device. In the sixth aspect and possible implementations of the sixth aspect, an example in which the communication method is performed by the terminal device is used for description. In the method, the terminal device obtains second information, where the second information is used to indicate to activate/release priority-based data transmission, or indicate to activate/release a limitation of a measurement gap.

In this embodiment of this application, the terminal device obtains the second information related to a priority of the measurement gap, so that the terminal device can determine a priority based on the second information, to implement data transmission, to address a conflict between the data transmission and the measurement gap.

Optionally, in a possible implementation of the sixth aspect, the method further includes: generating transmission if the measurement gap overlaps with the transmission and the transmission includes second data, where the second data satisfies one or more of the following: a priority of the second data is higher than the priority of the measurement gap, a priority of a channel used for the second data is higher than the priority of the measurement gap, or a priority of a resource used for the second data is higher than the priority of the measurement gap.

In this possible implementation, the transmission is generated when the measurement gap overlaps with the transmission and the transmission includes the second data. To be specific, the second data may be transmitted within the measurement gap, and a transmission limitation of the measurement gap on the second data may be ignored.

A seventh aspect of this application provides a communication apparatus. The apparatus is a network device, or the apparatus is some components (for example, a processor, a chip, or a chip system) in a network device, or the apparatus is a logic module or software that can implement all or a part of functions of a network device. The communication apparatus includes a transceiver unit.

The transceiver unit is configured to send second information, where the second information is used to indicate to activate/release priority-based data transmission, or indicate to activate/release a limitation of a measurement gap.

Optionally, in a possible implementation of the seventh aspect, the transceiver unit is further configured to receive second data, where the second data satisfies one or more of the following: a priority of the second data is higher than the priority of the measurement gap, a priority of a channel used for the second data is higher than the priority of the measurement gap, or a priority of a resource used for the second data is higher than the priority of the measurement gap.

An eighth aspect of this application provides a communication apparatus. The apparatus is a terminal device, or the apparatus is some components (for example, a processor, a chip, or a chip system) in a terminal device, or the apparatus is a logic module or software that can implement all or a part of functions of a terminal device. The communication apparatus includes a transceiver unit.

The transceiver unit is configured to obtain second information, where the second information is used to indicate to activate/release priority-based data transmission, or indicate to activate/release a limitation of a measurement gap.

Optionally, in a possible implementation of the eighth aspect, the transceiver unit is further configured to generate transmission if the measurement gap overlaps with the transmission and the transmission includes second data, where the second data satisfies one or more of the following: a priority of the second data is higher than the priority of the measurement gap, a priority of a channel used for the second data is higher than the priority of the measurement gap, or a priority of a resource used for the second data is higher than the priority of the measurement gap.

A ninth aspect of this application provides a communication apparatus, including at least one processor. The at least one processor is coupled to a memory. The memory is configured to store a program or instructions. The at least one processor is configured to execute the program or the instructions, to enable the apparatus to implement the method according to any one of the possible implementations of the first aspect or the fifth aspect.

A tenth aspect of this application provides a communication apparatus, including at least one processor. The at least one processor is coupled to a memory. The memory is configured to store a program or instructions. The at least one processor is configured to execute the program or the instructions, to enable the apparatus to implement the method according to any one of the possible implementations of the second aspect or the sixth aspect.

An eleventh aspect of this application provides a communication apparatus, including at least one logic circuit and an input/output interface. The logic circuit is configured to perform the method according to any one of the possible implementations of the first aspect or the fifth aspect.

A twelfth aspect of this application provides a communication apparatus, including at least one logic circuit and an input/output interface. The logic circuit is configured to perform the method according to any one of the possible implementations of the second aspect or the sixth aspect.

A thirteenth aspect of this application provides a communication system. The communication system includes a network device according to any one of the possible implementations of the third aspect and the terminal device according to any one of the possible implementations of the fourth aspect, or includes the network device according to any one of the possible implementations of the seventh aspect and the terminal device according to any one of the possible implementations of the eighth aspect, or includes the network device according to any one of the possible implementations of the ninth aspect and the terminal device according to any one of the possible implementations of the tenth aspect, or includes the network device according to any one of the possible implementations of the eleventh aspect and the terminal device according to any one of the possible implementations of the twelfth aspect.

A fourteenth aspect of this application provides a computer-readable storage medium. The storage medium is configured to store one or more computer-executable instructions. When the computer-executable instructions are executed by a processor, the processor performs the method according to any one of the possible implementations of any one of the first aspect, the second aspect, the fifth aspect, and the sixth aspect.

A fifteenth aspect of this application provides a computer program product (or referred to as a computer program). When the computer program in the computer program product is executed by the processor, the processor performs the method according to any one of the possible implementations of any one of the first aspect, the second aspect, the fifth aspect, and the sixth aspect.

A sixteenth aspect of this application provides a chip system. The chip system includes at least one processor, configured to support a communication apparatus in implementing the method according to any one of the possible implementations of any one of the first aspect, the second aspect, the fifth aspect, and the sixth aspect.

In a possible design, the chip system may further include a memory. The memory is configured to store program instructions and data that are necessary for the communication apparatus. The chip system may include a chip, or may include a chip and another discrete component. Optionally, the chip system further includes an interface circuit, and the interface circuit provides program instructions and/or data for the at least one processor.

For technical effects of any design of the third aspect to the sixteenth aspect, refer to the technical effects of different designs of the first aspect and the second aspect. Details are not described herein again.

### BRIEF DESCRIPTION OF DRAWINGS

FIG. 1A is a diagram of a communication system according to this application;
FIG. 1B is another diagram of a communication system according to this application;
FIG. 1C is another diagram of a communication system according to this application;
FIG. 2 is a schematic flowchart of a communication method according to this application;
FIG. 3 is another schematic flowchart of a communication method according to this application;
FIG. 4 is another schematic flowchart of a communication method according to this application;
FIG. 5 is another schematic flowchart of a communication method according to this application;
FIG. 6 is a diagram of time periods according to this application;
FIG. 7 is a diagram of generating transmission by a terminal device according to this application;
FIG. 8 is a diagram of not generating transmission by a terminal device according to this application;
FIG. 9 is another diagram of generating transmission by a terminal device according to this application;
FIG. 10 is another schematic flowchart of a communication method according to this application; and
FIG. 11 to FIG. 14 are several diagrams of a communication apparatus according to this application.

### DESCRIPTION OF EMBODIMENTS

The following clearly and completely describes the technical solutions in embodiments of this application with reference to the accompanying drawings in embodiments of this application.

First, some terms in embodiments of this application are described for ease of understanding by a person skilled in the art.

### 1. Configuration and preconfiguration

In this application, both the configuration and the preconfiguration are used. The configuration means that a network device/server sends configuration information of some parameters or values of parameters to a terminal by using a message or signaling, so that the terminal determines a parameter for communication or a resource for transmission based on the values or the information. Similar to the configuration, the preconfiguration may be parameter information or a parameter value on which a network device/server pre-negotiates with a terminal device, or may be parameter information or a parameter value that is stipulated in a standard protocol and that is used by a base station/network device or a terminal device, or may be parameter information or a parameter value that is prestored on a base station/server or a terminal device. This is not limited in this application.

Further, these values and parameters may be changed or updated.

2. In this application, "indicate" may include a direct indication and an indirect indication. Indication information being described as indicating A may be understood as that the indication information carries A, directly indicates A, or indirectly indicates A.

In this application, information indicated by indication information is referred to as to-be-indicated information. During specific implementation, the to-be-indicated information may be indicated in a plurality of manners, for example, but not limited to: The to-be-indicated information may be directly indicated, for example, the to-be-indicated information or an index of the to-be-indicated information is indicated. Alternatively, the to-be-indicated information may be indirectly indicated by indicating other information, where there is an association relationship between the other information and the to-be-indicated information. Alternatively, only a part of the to-be-indicated information may be indicated, and the other part of the to-be-indicated information is known or pre-agreed upon. For example, specific information may alternatively be indicated by an arrangement sequence of a plurality of pieces of information that is pre-agreed upon (for example, stipulated in a protocol), to reduce indication overheads to some extent.

The to-be-indicated information may be sent as a whole, or may be divided into a plurality of pieces of sub-information for separate sending. In addition, sending periodicities and/or sending occasions of the sub-information may be the same or different. A specific sending method is not limited in this application. The sending periodicities and/or the sending occasions of the sub-information may be predefined, for example, predefined according to a protocol, or may be configured by a transmit-end device by sending configuration information to a receive-end device. The configuration information may include, for example, but not limited to, one or a combination of at least two of radio resource control signaling, media access control (media access control, MAC) layer signaling, and physical layer signaling. The radio resource control signaling includes, for example, radio resource control (radio resource control, RRC) signaling. The MAC layer signaling includes, for example, a MAC control element (control element, CE). The physical layer signaling includes, for example, downlink control information (downlink control information, DCI).

3. Ordinal numbers such as "first" and "second" in embodiments of this application are intended to distinguish between a plurality of objects, but not to limit an order, a time sequence, priorities, or importance of the plurality of objects.

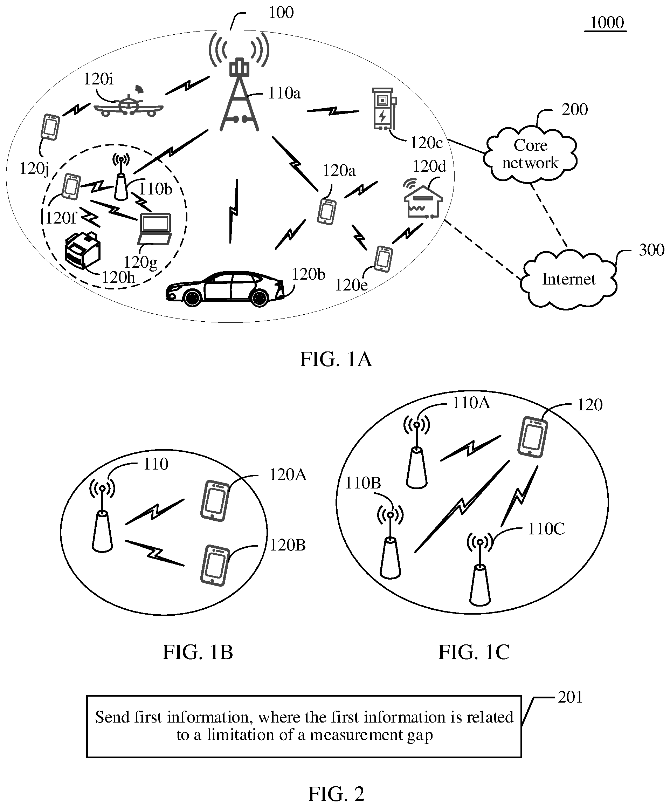

FIG. 1A is a diagram of an architecture of a communication system 1000 to which an embodiment of this application is applied. As shown in FIG. 1A, the communication system includes a radio access network (radio access network, RAN) 100 and a core network 200. Optionally, the communication system 1000 may further include an internet 300. The RAN 100 includes at least one RAN node (for example, 110a and 110b in FIG. 1A, collectively referred to as 110), and may further include at least one terminal (for example, 120a to 120j in FIG. 1A, collectively referred to as 120). The RAN 100 may further include another RAN node, for example, a wireless relay device and/or a wireless backhaul device (not shown in FIG. 1A). The terminal 120 is connected to the RAN node 110 in a wireless manner, and the RAN node 110 is connected to the core network 200 in a wireless or wired manner. A core network device in the core network 200 and the RAN node 110 in the RAN 100 may be different physical devices that are independent of each other, or may be a same physical device that integrates a logical function of the core network device and a logical function of the RAN node. Terminals may be connected to each other in a wired or wireless manner, and RAN nodes may be connected to each other in a wired or wireless manner.

The RAN 100 may be an evolved universal terrestrial radio access (evolved universal terrestrial radio access, E-UTRA) system, an NR system, or a future radio access system defined in 3GPP. The RAN 100 may alternatively include two or more different radio access systems. The RAN 100 may alternatively be an open RAN (open RAN, O-RAN).

The RAN node is also referred to as a radio access network device, a RAN entity, or an access node, and is configured to help the terminal access the communication system in a wireless manner. In an application scenario, the RAN node may be a base station (base station), an evolved NodeB (evolved NodeB, eNodeB), a transmission and reception point (transmission reception point, TRP), a next generation NodeB (next generation NodeB, gNB) in a 5th generation (5th generation, 5G) mobile communication system, a next generation NodeB in a 6th generation (6th generation, 6G) mobile communication system, or a base station in a future mobile communication system. The RAN node may be a macro base station (for example, 110a in FIG. 1A), or may be a micro base station or an indoor base station (for example, 110b in FIG. 1A), or may be a relay node or a donor node.

In another application scenario, a plurality of RAN nodes may cooperate to help the terminal implement radio access, and different RAN nodes each implement a part of functions of a base station. For example, the RAN node may be a central unit (central unit, CU), a distributed unit (distributed unit, DU), or a radio unit (radio unit, RU). The CU herein performs functions of a radio resource control protocol and a packet data convergence protocol (packet data convergence protocol, PDCP) of the base station, and may further perform a function of a service data adaptation protocol (service data adaptation protocol, SDAP). The DU performs functions of a radio link control layer and a medium access control (medium access control, MAC) layer of the base station, and may further perform some or all functions of a physical layer. For specific descriptions of the foregoing protocol layers, refer to related technical specifications of 3GPP. The RU may be configured to implement a radio frequency signal sending/receiving function. The CU and the DU may be two independent RAN nodes, or may be integrated into a same RAN node, for example, integrated into a baseband unit (baseband unit, BBU). The RU may be included in a radio frequency device, for example, included in a remote radio unit (remote radio unit, RRU) or an active antenna unit (active antenna unit, AAU). The CU may be further divided into two types of RAN nodes: a CU-control plane and a CU-user plane.

In different systems, the RAN node may have different names. For example, in an O-RAN system, the CU may be referred to as an open CU (open CU, O-CU), the DU may be referred to as an open DU (open DU, O-DU), and the RU may be referred to as an open RU (open RU, O-RU). The RAN node in embodiments of this application may be implemented by using a software module, a hardware module, or a combination of a software module and a hardware module. For example, the RAN node may be a server on which a corresponding software module is loaded. A specific technology and a specific device form that are used by the RAN node are not limited in embodiments of this application.

In addition, the RAN node may also be referred to as a network device, and the network device is an apparatus deployed in a radio access network to provide a wireless communication function for a terminal device. The network device may include a macro base station, a micro base station (also referred to as a small cell), a relay station, an access point, and the like in various forms. In systems using different radio access technologies, the network device may have different names, for example, an eNB or eNodeB (Evolutional NodeB) in long term evolution (Long Term Evolution, LTE). The network device may alternatively be a radio controller in a cloud radio access network (Cloud Radio Access Network, CRAN) scenario. The network device may alternatively be a base station device in a future 5G network or a network device in a future evolved PLMN network. The network device may alternatively be a wearable device or an in-vehicle device. The network device may alternatively be a transmission and reception point (Transmission and Reception Point, TRP). In addition, in a network structure, the network device may include a central unit (centralized unit, CU) node, a distributed unit (distributed unit, DU) node, or a RAN device including a CU node and a DU node. For ease of description, an example in which a base station serves as the RAN node is used below for description.

The terminal is a device with a wireless transceiver function, and may send a signal to the base station, or receive a signal from the base station. The terminal may also be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle to everything, V2X) communication, machine type communication (machine-type communication, MTC), an internet of things (internet of things, IOT), virtual reality, augmented reality, industrial control, autonomous driving, telemedicine, a smart grid, smart furniture, a smart office, a smart wearable, smart transportation, and a smart city. The terminal may be a mobile phone, a tablet computer, a computer with a wireless transceiver function, a wearable device, a vehicle, an airplane, a ship, a robot, a robotic arm, a smart home device, or the like. A specific technology and a specific device form that are used for the terminal are not limited in embodiments of this application.

The base station and the terminal may be fixed or movable. The base station and the terminal may be deployed on land, including an indoor or outdoor device, a handheld device, or an in-vehicle device, or may be deployed on water, or may be deployed on an airplane, a balloon, or an artificial satellite. Application scenarios of the base station and the terminal are not limited in embodiments of this application.

Roles of the base station and the terminal may be relative roles. For example, a helicopter or an uncrewed aerial vehicle 120i in FIG. 1A may be configured as a mobile base station. For a terminal 120j accessing the radio access network 100 through 120i, the terminal 120i is a base station. However, for a base station 110a, 120i is a terminal. To be specific, 110a and 120i communicate with each other based on a radio air interface protocol. Certainly, 110a and 120i may alternatively communicate with each other through an interface protocol between base stations. In this case, for 110a, 120i is also a base station. Therefore, both the base station and the terminal may be collectively referred to as communication apparatuses. 110a and 110b in FIG. 1A may be referred to as communication apparatuses with a function of a base station. 120a to 120j in FIG. 1A may be referred to as communication apparatuses with a function of a terminal.

Communication between the base station and the terminal, between base stations, or between terminals may be performed by using a licensed spectrum, or may be performed by using an unlicensed spectrum, or may be performed by using both a licensed spectrum and an unlicensed spectrum. Communication may be performed by using a spectrum below 6 gigahertz (gigahertz, GHz), or may be performed by using a spectrum above 6 GHz, or may be performed by using both a spectrum below 6 GHz and a spectrum above 6 GHz. A spectrum resource used for wireless communication is not limited in embodiments of this application.

In embodiments of this application, a function of the base station may alternatively be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. A function of the terminal may alternatively be performed by a module (for example, a chip or a modem) in the terminal, or may be performed by an apparatus including the function of the terminal.

It can be understood that, as described above, the RAN 100 includes at least one RAN node (for example, 110a and 110b in FIG. 1A, collectively referred to as 110), and may further include at least one terminal (for example, 120a to 120j in FIG. 1A, collectively referred to as 120).

In a possible implementation, the communication system shown in FIG. 1A may alternatively include, as shown in FIG. 1B, one RAN node 110 and a plurality of terminals (for example, 120A and 120B in FIG. 1B). In this case, a single RAN node may transmit data or control signaling to one or more terminals.

In another possible implementation, the communication system shown in FIG. 1A may alternatively include, as shown in FIG. 1C, a plurality of RAN nodes (110A, 110B, and 110C shown in FIG. 1C) 110 and one terminal 120. In this case, a plurality of RAN nodes may alternatively simultaneously transmit data or control signaling to a single terminal.

Currently, to perform measurement on a reference signal at a target frequency, a terminal device needs to tune a radio frequency from a serving cell to the target frequency, leading to interruption of data transmission of the serving cell. Therefore, a network device needs to configure a measurement gap (Measurement Gap, MG) for the terminal device. Within duration of the configured MG, no data is transmitted between the network device and the terminal device, to facilitate measurement on the reference signal. In addition, a periodicity of the MG is an integer periodicity.

However, some service data (for example, an extended reality service) has a non-integer periodicity. In this case, when a network configures the MG, overlapping with the service data inevitably occurs, leading to a conflict between the MG and transmission of the service data.

To resolve the foregoing technical problem, embodiments of this application provide a communication method and a related device. A network device sends, to a terminal device, first information related to a priority of a measurement gap, so that the terminal device can perform data transmission based on the first information, to address a conflict between service data and the measurement gap.

The following describes the communication method provided in embodiments of this application.

FIG. 2 is a schematic flowchart of a communication method according to an embodiment of this application. The method may include step 201. Step 201 may be performed by a network device, or may be performed by some components (for example, a processor, a chip, or a chip system) in a network device, or may be implemented by a logic module or software that can implement all or a part of functions of a network device. An example in which step 201 is performed by the network device is used below for description. Processing performed by a single execution entity in step 201 may alternatively be performed by a plurality of execution entities, and the execution entities may be logically and/or physically separated. For example, processing performed by the network device may be performed by at least one of a CU, a DU, and an RU. Step 201 is described in detail below.

Step 201: The network device sends first information, where the first information is related to a limitation of a measurement gap.

The network device sends the first information, where the first information is related to the limitation of the measurement gap (measurement gaps, MG). The MG may be understood as a measurement interval corresponding to a measurement GAP (GAP).

In this embodiment of this application, the first information being related to the limitation of the measurement gap may be interpreted in a plurality of manners, and may be interpreted as that the first information is related to a priority of the measurement gap (for example, the first information indicates that the priority of the measurement gap is low), or may be interpreted as that the first information indicates to transmit data while ignoring the measurement gap, or may be interpreted as that the first information indicates to deactivate the measurement gap, or may be interpreted as that the first information indicates that transmission may be generated when the measurement gap overlaps with the transmission, or the like. This is not specifically limited herein.

There are a plurality of possibilities in which the first information is related to the priority of the measurement gap. For example, the first information indicates that a priority of a first channel is higher than the priority of the measurement gap. For another example, the first information indicates that a priority of a first resource is higher than the priority of the measurement gap. For another example, the first information indicates that a priority of first data is higher than the priority of the measurement gap. These several cases are described subsequently. Details are not described herein.

In this embodiment of this application, a manner of sending the first information by the network device may be sending the first information to a specified receive end (for example, a terminal device), or broadcasting the first information. This is not specifically limited herein.

Optionally, the network device sends the first information to the terminal device. Correspondingly, the terminal device receives the first information sent by the network device.

A process of sending, by the network device, the first information to the terminal device may also be understood as a process of configuring the first information for the terminal device.

Optionally, the first information may be carried in RRC, a MAC CE, DCI, or another message/signaling. This is not specifically limited herein.

In addition, this step may be actively triggered, or may be passively triggered. This is not specifically limited herein. For example, the process of sending, by the network device, the first information to the terminal device may be triggered based on a request of the terminal device. For another example, the network device actively sends the first information to the terminal device.

Optionally, a type of the first information may include a retention type or a release type. The retention type is used for the terminal device to save the first information when a field related to the first information does not exist. The release type is used for the terminal device to release the first information when a field related to the first information does not exist.

Further, the type of the first information being the retention type is equivalent to that, when configuration information (or understood as reconfiguration information) subsequently received by the terminal device does not include the first information, the terminal device still uses the priority that is indicated by the first information and that is related to the measurement gap. To be specific, after the network device configures the first information, if the first information is not reconfigured during reconfiguration or the first information does not exist, a current configuration of the first information may be retained.

Further, the type of the first information being the release type is equivalent to that, when configuration information received by the terminal device again does not include the first information, the terminal device does not use the priority that is indicated by the first information and that is related to the measurement gap. To be specific, after the network device configures the first information, if the first information is not reconfigured during reconfiguration, the configuration of the first information needs to be released.

In this embodiment of this application, there are a plurality of cases in which the first information is related to the priority of the measurement gap, and the cases are separately described below.

In a first case, the first information is used to indicate that the priority of the first channel is higher than the priority of the measurement gap.

In this case, the first information is used to indicate that the priority of the first channel is higher than the priority of the measurement gap.

In this embodiment of this application, the first channel includes one or more of the following: a logical channel (logical channel, LCH), a logical channel group, a protocol data unit (protocol data unit, PDU) set, a radio bearer (radio bearer, RB), a quality of service (quality of service, QoS) flow, or the like.

The first information may be configured in a plurality of possible manners. Alternatively, this is understood as that the network device may configure the first information in a plurality of possible manners, or this is understood as that the first information specifically indicates the first channel in a plurality of possible manners. This is not specifically limited herein.

Optionally, the first information specifically indicates the first channel in a first manner. The first manner includes one or more of the following: a bit mapping manner, an identifier indication manner, an indication information manner (for example, an enumeration manner or a Boolean format), or the like.

In a possible implementation, the first manner is the bit mapping manner.

In this manner, the first information specifically indicates the first channel in the bit mapping manner, the first information includes N bits, the first channel includes N channels, the N bits are respectively in a one-to-one correspondence with the N channels, a priority of a channel corresponding to a bit among the N bits that is a first value is higher than the priority of the measurement gap, a priority of a channel corresponding to a bit among the N bits that is a second value is lower than the priority of the measurement gap, and N is an integer greater than 0.

For example, N is 4, and the first channel is an LCH. A quantity of first channels configured by the first information is 4, and the first information includes 4 bits. The first channel includes an LCH 1, an LCH 2, an LCH 3, and an LCH 4, and the first information is specifically 0011. To be specific, a bit corresponding to the LCH 1 is 0, a bit corresponding to the LCH 2 is 0, a bit corresponding to the LCH 3 is 1, and a bit corresponding to the LCH 4 is 1. Assuming that 0 indicates a high priority, priorities of the LCH 1 and the LCH 2 are higher than the priority of the measurement gap, and priorities of the LCH 3 and the LCH 4 are lower than the priority of the measurement gap.

It can be understood that, in the foregoing example, 1 may alternatively indicate a high priority. In this case, priorities of the LCH 1 and the LCH 2 are lower than the priority of the measurement gap, and priorities of the LCH 3 and the LCH 4 are higher than the priority of the measurement gap.

In another possible implementation, the first manner is the identifier indication manner.

In this manner, the first information specifically indicates the first channel in the identifier indication manner, the first information includes an identifier of the first channel, and a priority of a first channel corresponding to the identifier of the first channel is higher than the priority of the measurement gap. Certainly, the priority of the first channel corresponding to the identifier of the first channel may alternatively be lower than the priority of the measurement gap.

For example, the priority of the first channel corresponding to the identifier of the first channel is higher than the priority of the measurement gap, identifiers of first channels configured by the first information are 1 and 2, and all current first channels include an LCH 1 (an identifier is 1), an LCH 2 (an identifier is 2), an LCH 3 (an identifier is 3), and an LCH 4 (an identifier is 4). In this case, priorities of the LCH 1 and the LCH 2 are higher than the priority of the measurement gap. Because the LCH 3 and the LCH 4 are not indicated in the first information, priorities of the LCH 3 and the LCH 4 are lower than the priority of the measurement gap.

It can be understood that, in the foregoing example, the priority of the first channel corresponding to the identifier of the first channel that is indicated in the first information may alternatively be lower than the priority of the measurement gap. In this case, priorities of the LCH 1 and the LCH 2 are lower than the priority of the measurement gap, and priorities of the LCH 3 and the LCH 4 are higher than the priority of the measurement gap.

In another possible implementation, the first manner is indication information, and the indication information is used to indicate that the priority of the first channel is higher than the priority of the measurement gap.

In this manner, the first information specifically indicates the first channel in the enumeration manner, the Boolean format, or the like. When the priority of the first channel is higher than the priority of the measurement gap, the first information may be True. When the priority of the first channel is lower than the priority of the measurement gap, the first information may be False, or the first information does not exist. Certainly, alternatively, the priority of the first channel may be higher than the priority of the measurement gap when the first information is False or does not exist.

It should be noted that the foregoing several manners of indicating the first channel are merely examples. During actual application, there may be other manners of indicating the first channel. Certainly, the foregoing several manners may alternatively be combined. For example, the identifier indication manner and the enumeration manner are combined to indicate the first channel. For another example, the bit mapping manner and the enumeration manner are combined to indicate the first channel. A specific manner of indicating the first channel by the first information is not limited in this application.

In a second case, the first information is used to indicate that the priority of the first resource is higher than the priority of the measurement gap.

In this case, the first information is used to indicate that the priority of the first resource is higher than the priority of the measurement gap.

In this embodiment of this application, the first resource includes one or more of the following: an uplink resource, a downlink resource, a periodic transmission resource, a retransmission resource, or the like.

The first information may be configured in a plurality of possible manners. Alternatively, this is understood as that the network device may configure the first information in a plurality of possible manners, or this is understood as that the first information specifically indicates the first resource in a plurality of possible manners. This is not specifically limited herein.

Optionally, to reduce signaling transmission, the first information may be configured in configuration information of the first resource.

In addition, a granularity of the first resource may be a frequency band, a subframe, a slot, a symbol, an RE, or the like. This is not specifically limited herein. The first resource may also be referred to as a configured grant (configured grant, CG), a preconfigured resource, or the like.

Optionally, similar to indicating the first channel, the first information may specifically indicate the first resource in a first manner. The first manner includes one or more of the following: a bit mapping manner, an identifier indication manner, an indication information manner (for example, an enumeration manner or a Boolean format), or the like.

In a possible implementation, the first manner is the bit mapping manner.

In this manner, the first information specifically indicates the first resource in the bit mapping manner, the first information includes M bits, the first resource includes M resources, the M bits are respectively in a one-to-one correspondence with the M resources, a priority of a resource corresponding to a bit among the M bits that is a third value is higher than the priority of the measurement gap, a priority of a resource corresponding to a bit among the M bits that is a fourth value is lower than the priority of the measurement gap, and M is an integer greater than 0.

For example, M is 4, and the first resource is represented by a CG. A quantity of first resources configured by the first information is 4, and the first information includes 4 bits. The first resource includes a CG 1, a CG 2, a CG 3, and a CG 4, and the first information is specifically 0011. To be specific, a bit corresponding to the CG 1 is 0, a bit corresponding to the CG 2 is 0, a bit corresponding to the CG 3 is 1, and a bit corresponding to the CG 4 is 1. Assuming that 0 indicates a high priority, priorities of the CG 1 and the CG 2 are higher than the priority of the measurement gap, and priorities of the CG 3 and the CG 4 are lower than the priority of the measurement gap.

It can be understood that, in the foregoing example, 1 may alternatively indicate a high priority. In this case, priorities of the CG 1 and the CG 2 are lower than the priority of the measurement gap, and priorities of the CG 3 and the CG 4 are higher than the priority of the measurement gap.

In another possible implementation, the first manner is the identifier indication manner.

In this manner, the first information specifically indicates the first resource in the identifier indication manner, the first information includes an identifier of the first resource, and a priority of a first resource corresponding to the identifier of the first resource is higher than the priority of the measurement gap. Certainly, the priority of the first resource corresponding to the identifier of the first resource may alternatively be lower than the priority of the measurement gap.

For example, the priority of the first resource corresponding to the identifier of the first resource is higher than the priority of the measurement gap, identifiers of first resources configured by the first information are 1 and 2, and all current first resources include a CG 1 (an identifier is 1), a CG 2 (an identifier is 2), a CG 3 (an identifier is 3), and a CG 4 (an identifier is 4). In this case, priorities of the CG 1 and the CG 2 are higher than the priority of the measurement gap. Because the CG 3 and the CG 4 are not indicated in the first information, priorities of the CG 3 and the CG 4 are lower than the priority of the measurement gap.

It can be understood that, in the foregoing example, the priority of the first resource corresponding to the identifier of the first resource that is indicated in the first information may alternatively be lower than the priority of the measurement gap. In this case, priorities of the CG 1 and the CG 2 are lower than the priority of the measurement gap, and priorities of the CG 3 and the CG are higher than the priority of the measurement gap.

In another possible implementation, the first manner is indication information, and the indication information is used to indicate that the priority of the first resource is higher than the priority of the measurement gap.

In this manner, the first information specifically indicates the first resource in the enumeration manner, the Boolean format, or the like. When the priority of the first resource is higher than the priority of the measurement gap, the first information may be True. When the priority of the first resource is lower than the priority of the measurement gap, the first information may be False, or the first information does not exist. Certainly, alternatively, the priority of the first resource may be higher than the priority of the measurement gap when the first information is False or does not exist.

It should be noted that the foregoing several manners of indicating the first resource are merely examples. During actual application, there may be other manners of indicating the first resource. Certainly, the foregoing several manners may alternatively be combined. For example, the identifier indication manner and the enumeration manner are combined to indicate the first resource. For another example, the bit mapping manner and the enumeration manner are combined to indicate the first resource. A specific manner of indicating the first resource by the first information is not limited in this application. For example, the first channel has a mapping relationship with the first resource.

In a third case, the first information is used to indicate that the priority of the first data is higher than the priority of the measurement gap.

In this embodiment of this application, the first data may be all data transmitted between the network device and the terminal device, or may be data of a specific service or services, or may be data on a specific channel or channels (which may also be referred to as a second channel), or may be data on a specific resource or resources (which may also be referred to as a second resource), or the like. This is not specifically limited herein.

The first information being used to indicate that the priority of the first data is higher than the priority of the measurement gap may be: During transmission of the first data, data transmission may be performed while ignoring the MG, or the MG is deactivated, without a clear concept of a priority.

Ignoring the MG means that data is transmission when the data transmission overlaps with the MG.

The specific service may be a service with a non-integer periodicity, for example, including one or more of the following: XR services such as an augmented reality (augmented reality, AR) service and a virtual reality (virtual reality, VR) service. The specific service may alternatively be a service with a high requirement for a delay (for example, some audio/video services). The specific service may be set according to an actual requirement. This is not specifically limited herein.

In this embodiment of this application, the second channel includes one or more of the following: an LCH, an LCH group, a PDU set, an RB, a QoS flow, or the like. The second resource includes one or more of the following: an uplink resource, a downlink resource, a periodic transmission resource, a retransmission resource, or the like.

Optionally, the first data is data transmitted through the second channel and/or the second resource. In this case, the network device may further configure a first parameter for the terminal device, and the first parameter is used to indicate the second channel and/or the second resource.

Optionally, a type of the first parameter includes a retention type or a release type. The retention type is used for the terminal device to save the first parameter when a field related to the first parameter does not exist. The release type is used for the terminal device to release the first parameter when a field related to the first parameter does not exist. The first parameter may be referred to as an IE element or field. The field related to the first parameter may be in an RRC request or reconfiguration information.

Further, the type of the first parameter being the retention type is equivalent to that, when configuration information (or understood as reconfiguration information) subsequently received by the terminal device does not include the first parameter, the terminal device still uses the second channel and/or the second resource indicated by the first parameter. To be specific, after the network device configures the first parameter, if the first parameter is not reconfigured during reconfiguration or the first parameter does not exist, a current configuration of the first parameter may be retained.

Further, the type of the first parameter being the release type is equivalent to that, when configuration information received by the terminal device again does not include the first parameter, the terminal device does not use the second channel and/or the second resource indicated by the first parameter. To be specific, after the network device configures the first parameter, if the first parameter is not reconfigured during reconfiguration, the configuration of the first parameter needs to be released.

In a possible implementation, the first data is data transmitted through the second channel.

In this manner, the first parameter specifically indicates the second channel in a first manner. The first manner includes one or more of the following: a bit mapping manner, an identifier indication manner, an indication information manner (for example, an enumeration manner or a Boolean format), or the like.
1. The first manner is the bit mapping manner.

In this manner, the first parameter specifically indicates the second channel in the bit mapping manner, the first parameter includes N bits, the second channel includes N channels, the N bits are respectively in a one-to-one correspondence with the N channels, a priority of first data in a channel corresponding to a bit among the N bits that is a first value is higher than the priority of the measurement gap, a priority of first data in a channel corresponding to a bit among the N bits that is a second value is lower than the priority of the measurement gap, and N is an integer greater than 0.

In an implementation, during transmission of the first data in the channel corresponding to the bit among the N bits that is the first value, the measurement gap may be ignored, or the measurement gap may be deactivated; and during transmission of the first data in the channel corresponding to the bit among the N bits that is the second value, the measurement gap cannot be ignored, and the measurement gap cannot activated, where N is an integer greater than 0.

2. The first manner is the identifier indication manner.

In this manner, the first parameter specifically indicates the second channel in the identifier indication manner, the first parameter includes an identifier of the second channel, and a priority of first data in a channel corresponding to the identifier of the second channel is higher than the priority of the measurement gap. Certainly, the priority of the first data in the channel corresponding to the identifier of the second channel may alternatively be lower than the priority of the measurement gap.

In an implementation, during transmission of the first data in the channel corresponding to the identifier of the second channel, the measurement gap may be ignored, or the measurement gap may be deactivated; and during transmission of first data in a channel other than the second channel, the measurement gap cannot be ignored.

3. The first manner is the indication information manner.

In this manner, the first parameter specifically indicates the second channel in the enumeration manner, the Boolean format, or the like. When a priority of the second channel is higher than the priority of the measurement gap, the first parameter may be True. When the priority of the second channel is lower than the priority of the measurement gap, the first parameter may be False, or the first parameter does not exist. Certainly, alternatively, the priority of the second channel may be higher than the priority of the measurement gap when the first parameter is False or does not exist.

In an implementation, during transmission of first data in the second channel, the measurement gap may be ignored, or the measurement gap may be deactivated; and during transmission of first data in a channel other than the second channel, the measurement gap cannot be ignored.

It should be noted that the foregoing several manners of indicating the second channel are merely examples. During actual application, there may be other manners of indicating the second channel. Certainly, the foregoing several manners may alternatively be combined. For example, the identifier indication manner and the enumeration manner are combined to indicate the second channel. For another example, the bit mapping manner and the enumeration manner are combined to indicate the second channel. A specific manner of indicating the second channel by the first parameter is not limited in this application.

In another possible implementation, the first data is data transmitted through the second resource.

In this manner, the first parameter specifically indicates the second resource in a first manner. The first manner includes one or more of the following: a bit mapping manner, an identifier indication manner, an indication information manner (for example, an enumeration manner or a Boolean format), or the like.

Optionally, to reduce signaling transmission, the first parameter may be configured in configuration information of the first resource.
1. The first manner is the bit mapping manner.

In this manner, the first parameter specifically indicates the second resource in the bit mapping manner, the first parameter includes M bits, the second resource includes M resources, the M bits are respectively in a one-to-one correspondence with the M resources, a priority of first data on a resource corresponding to a bit among the M bits that is a third value is higher than the priority of the measurement gap, a priority of first data on a resource corresponding to a bit among the M bits that is a fourth value is lower than the priority of the measurement gap, and M is an integer greater than 0.

In an implementation, during transmission of the first data on the resource corresponding to the bit among the N bits that is the third value, the measurement gap may be ignored, or the measurement gap may be deactivated; and during transmission of the first data on the resource corresponding to the bit among the N bits that is the fourth value, the measurement gap cannot be ignored, where N is an integer greater than 0.

2. The first manner is the identifier indication manner.

In this manner, the first parameter specifically indicates the second resource in the identifier indication manner, the first parameter includes an identifier of the second resource, and a priority of first data in a resource corresponding to the identifier of the second resource is higher than the priority of the measurement gap. Certainly, the priority of the first data on the resource corresponding to the identifier of the second resource may alternatively be lower than the priority of the measurement gap.

In an implementation, during transmission of the first data on the resource corresponding to the identifier of the second resource, the measurement gap may be ignored, or the measurement gap may be deactivated; and during transmission of first data on a resource other than the second resource, the measurement gap cannot be ignored.

3. The first manner is the indication information manner.

In this manner, the first parameter specifically indicates the second resource in the enumeration manner, the Boolean format, or the like. When a priority of the second resource is higher than the priority of the measurement gap, the first parameter may be True. When the priority of the second resource is lower than the priority of the measurement gap, the first parameter may be False, or the first parameter does not exist. Certainly, alternatively, the priority of the second resource may be higher than the priority of the measurement gap when the first parameter is False or does not exist.

In an implementation, during transmission of first data on the second resource, the measurement gap may be ignored, or the measurement gap may be deactivated; and during transmission of first data on a resource other than the second resource, the measurement gap cannot be ignored.

It should be noted that the foregoing several manners of indicating the second resource are merely examples. During actual application, there may be other manners of indicating the second resource. Certainly, the foregoing several manners may alternatively be combined. For example, the identifier indication manner and the enumeration manner are combined to indicate the second resource. For another example, the bit mapping manner and the enumeration manner are combined to indicate the second resource. A specific manner of indicating the second resource by the first parameter is not limited in this application.

In addition, the several cases in which the first information is related to the priority of the measurement gap and the several cases of the first data are merely examples. During actual application, there may be other cases of the first information and the first data. For example, the first data may be transmitted through both the second channel and the second resource. Alternatively, this is understood as that the second channel has a mapping relationship with the second resource.

In this embodiment of this application, the network device sends, to the terminal device, the first information related to the limitation of the measurement gap, so that the terminal device can perform data transmission based on the first information, to address a conflict between the data transmission and the measurement gap.

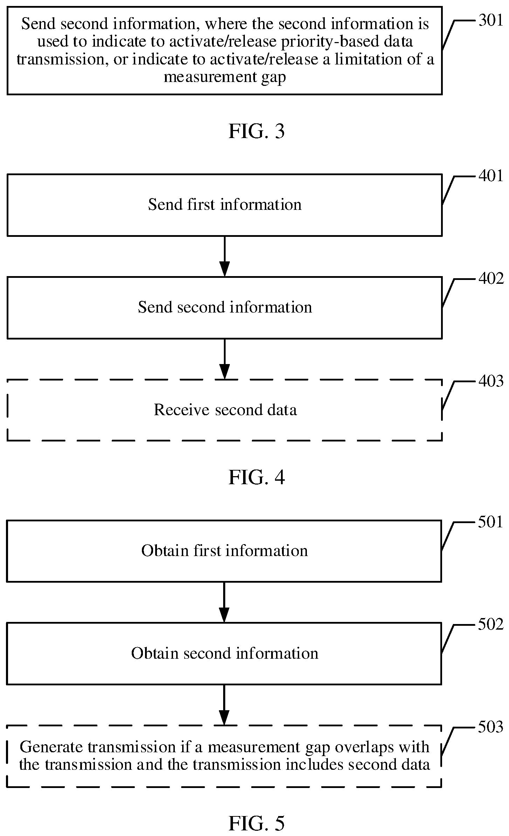

FIG. 3 is a schematic flowchart of a communication method according to an embodiment of this application. The method may include step 301. Step 301 may be performed by a network device, or may be performed by some components (for example, a processor, a chip, or a chip system) in a network device, or may be implemented by a logic module or software that can implement all or a part of functions of a network device. An example in which step 301 is performed by the network device is used below for description. Processing performed by a single execution entity in step 301 may alternatively be performed by a plurality of execution entities, and the execution entities may be logically and/or physically separated. For example, processing performed by the network device may be performed by at least one of a CU, a DU, and an RU. Step 301 is described in detail below.

Step 301: The network device sends second information, where the second information is used to indicate to activate/release priority-based data transmission, or indicate to activate/release a limitation of a measurement gap.

The network device sends the second information, where the second information is used to indicate to activate/release the priority-based data transmission, or indicate to activate/release the limitation of the measurement gap, or indicate whether to ignore the limitation of the measurement gap.

The activating may be understood as applying or using. The releasing may be understood as not applying or not using.

The priority-based data transmission means that, when data transmission overlaps with the measurement gap, data transmission is preferentially performed instead of performing measurement within the measurement gap.

In this embodiment of this application, a manner of sending the second information by the network device may be sending the first information to a specified receive end (for example, a terminal device), or broadcasting the first information. This is not specifically limited herein.

Optionally, the network device sends the second information to the terminal device. Correspondingly, the terminal device receives the second information sent by the network device.

Optionally, the terminal device receives the second information sent by the network device, and may perform data transmission based on a first parameter. For descriptions of the first parameters, refer to the descriptions in the embodiment shown in FIG. 2 or FIG. 5. Details are not described herein again.

A process of sending, by the network device, the second information to the terminal device may also be understood as a process of configuring the second information for the terminal device.

Optionally, the second information may be carried in RRC, a MAC CE, DCI, or another message/signaling. This is not specifically limited herein.

In addition, this step may be actively triggered, or may be passively triggered. This is not specifically limited herein. For example, the process of sending, by the network device, the second information to the terminal device may be triggered based on a request of the terminal device. For another example, the network device actively sends the second information to the terminal device.

In this embodiment of this application, the network device sends the second information to the terminal device. Because the second information is used to indicate to activate/release the priority-based data transmission, or indicate to activate/release the limitation of the measurement gap, or indicate whether to ignore the limitation of the measurement gap, the terminal device may trigger data transmission based on the second information, to address a conflict between the data transmission and the measurement gap.

It can be understood that, the embodiment shown in FIG. 2 and the embodiment shown in FIG. 3 may be combined.

FIG. 4 is another schematic flowchart of a communication method according to an embodiment of this application. The method may include step 401 to step 403. Step 401 to step 403 may be performed by a network device, or may be performed by some components (for example, a processor, a chip, or a chip system) in a network device, or may be implemented by a logic module or software that can implement all or a part of functions of a network device. An example in which step 401 to step 403 are performed by the network device is used below for description. Processing performed by a single execution entity in step 401 to step 403 may alternatively be performed by a plurality of execution entities, and the execution entities may be logically and/or physically separated. For example, processing performed by the network device may be performed by at least one of a CU, a DU, and an RU. Step 401 to step 403 are described in detail below.

Step 401: The network device sends first information.

For step 401, refer to the descriptions of step 201 in the embodiment shown in FIG. 2. Details are not described herein again.

Step 402: Send second information.

For step 402, refer to the descriptions of step 301 in the embodiment shown in FIG. 3. Details are not described herein again.

It should be noted that, because the embodiment in FIG. 4 is a combination of the embodiment in FIG. 2 and the embodiment in FIG. 3, for the second information in this embodiment of this application, in addition to the interpretations in the embodiment shown in FIG. 3, the second information may be further used to indicate to activate or release the first information. To be specific, the second information in this embodiment of this application is used to indicate to activate or release the first information, or indicate to activate/release priority-based data transmission, or indicate to activate/release a limitation of a measurement gap, or indicate whether to ignore the limitation of the measurement gap.

Step 403: Receive second data. This step is optional.

Optionally, the network device receives the second data, where a sending moment of the second data is within the measurement gap.

The second data in this embodiment of this application corresponds to the first data in the embodiment shown in FIG. 2. To be specific, the second data satisfies one or more of the following: the second data is the first data, the second data is data in a first channel, or the second data is data on a first resource.

For descriptions of the first data, the first channel, and the first resource, refer to the descriptions in the embodiment shown in FIG. 2. Details are not described herein again.

It should be noted that there are a plurality of cases of the communication method provided in the embodiment shown in FIG. 4. For example, the method may include step 401 and step 402. For another example, the method may include step 401, step 402, and step 403. This is not specifically limited herein.

In this embodiment of this application, the network device may schedule, by using the first information and/or the second information, whether the terminal device is to transmit data within the measurement gap, to control data transmission of terminal devices. In addition, the network device may receive the second data sent by the terminal device within the measurement gap. That is, the measurement gap does not affect transmission of the second data. This can address a conflict between data transmission and the measurement gap. In addition, if the terminal device urgently needs to transmit the second data for a current service, the terminal device may transmit the second data within the measurement gap, to meet a user requirement and improve user experience.

The foregoing describes the communication method provided in embodiments of this application from a perspective of the network device. The following describes a communication method provided in embodiments of this application from a perspective of a terminal device.

FIG. 5 is a schematic flowchart of a communication method according to an embodiment of this application. The method may include step 501 to step 503. Step 501 to step 503 may be performed by a terminal device, or may be performed by some components (for example, a processor, a chip, or a chip system) in a terminal device, or may be implemented by a logic module or software that can implement all or a part of functions of a terminal device. An example in which step 501 to step 503 are performed by the terminal device is used below for description. Processing performed by a single execution entity in step 501 to step 503 may alternatively be performed by a plurality of execution entities, and the execution entities may be logically and/or physically separated. Step 501 to step 503 are described in detail below.

Step 501: Obtain first information.

In this embodiment of this application, the terminal device may obtain the first information in plurality of manners. The first information may be first information sent by a network device, or may be first information prestored or predefined by the terminal device, or may be preconfigured, or may be extracted from configuration information, or the like. This is not specifically limited herein.

For descriptions of the first information, refer to the descriptions of the first information in the embodiment shown in FIG. 2. Details are not described herein again.

Step 502: Obtain second information.

The terminal device may further obtain the second information, where the second information is used to indicate to activate or release the first information, or the second information is used to indicate to activate or release priority-based data transmission, or the second information is used to indicate whether to ignore a limitation of a measurement gap.

In a possible implementation, when the embodiment shown in FIG. 5 includes step 501, the second information is used to indicate to activate or release the first information, or the second information is used to indicate to activate or release the priority-based data transmission, or the second information is used to indicate whether to ignore the limitation of the measurement gap.

In another possible implementation, when the embodiment shown in FIG. 5 does not step 501, the second information is used to indicate to activate or release the priority-based data transmission, or the second information is used to indicate whether to ignore the limitation of the measurement gap.

For descriptions of the second information, refer to the descriptions of the second information in the embodiment shown in FIG. 3 or FIG. 4. Details are not described herein again.

Step 503: Generate transmission if the measurement gap overlaps with the transmission and the transmission includes second data. This step is optional.

In this embodiment of this application, the second data is related to the first information, or the second data is related to the second information. For example, when the first information is used to indicate that a priority of first data is higher than a priority of the measurement gap, the second data includes the first data. For another example, when the first information is used to indicate that a priority of a first channel is higher than the priority of the measurement gap, the second data includes data in the first channel. For another example, when the first information is used to indicate that a priority of a first resource is higher than the priority of the measurement gap, the second data includes data on the first resource. For another example, when the second information is used to indicate to activate the priority-based data transmission, the second data includes priority-based data indicated by the second information. For another example, when the second information is used to indicate to ignore the limitation of the measurement gap, the second data includes data being transmitted.

In an implementation, no uplink data or downlink data other than the second data is transmitted within the measurement gap. The uplink data or the downlink data does not include uplink or downlink data in a random access process, for example, a message 3 or a message A, a random access response message, or a contention resolution message.

In this step, there are a plurality of cases of a relationship between the measurement gap and transmission of the second data. The plurality of cases are separately described below.

In a first case, the measurement gap overlaps with the transmission of the second data. If a first preset condition is met, the transmission of the second data is generated.

The measurement gap overlapping with the transmission of the second data may be understood as that the measurement gap overlaps with transmission and the transmission includes the second data. The transmission including the second data may also be understood as that transmitted data includes the second data.

In this case, the first preset condition is related to one or more of the following: the first information or the second information. For example, the first preset condition includes: the terminal device has obtained the first information. For another example, the first preset condition includes: the terminal device has obtained the second information, and the second information is used to indicate to activate the priority-based data transmission or indicate to ignore the limitation of the measurement gap. For another example, the first preset condition includes: the terminal device has obtained the first information and the second information, and the second information is used to indicate to activate the first information, or indicate to activate the priority-based data transmission, or indicate to ignore the limitation of the measurement gap. In this case, if the terminal device has obtained only the first information, the terminal device does not transmit the second data.

In an implementation, generating the transmission of the second data may be performing transmission of the second data or transmitting the second data, and further, transmitting the data in the first channel or transmitting the data on the first resource.

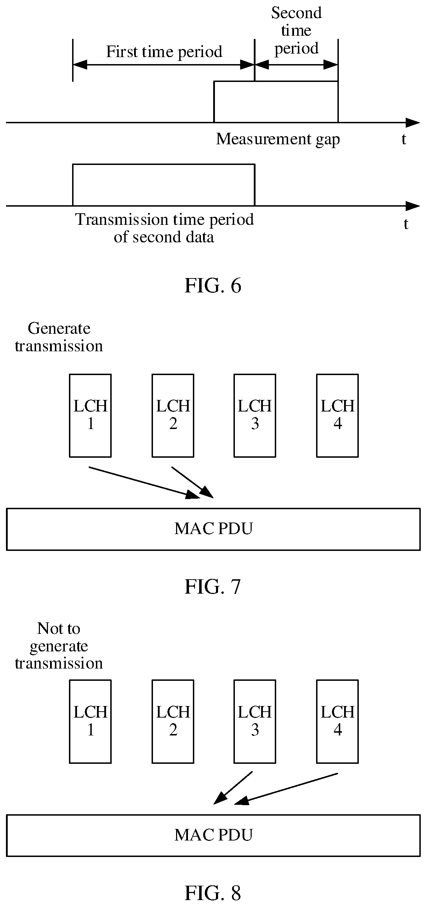

The measurement gap may overlap with the transmission of the second data in a first time period shown in FIG. 6. The first time period includes a transmission time period of the second data and an overlapping time period between the transmission time period of the second data and the measurement gap. Alternatively, this is understood as that the first time period belongs to the transmission time period of the second data, and the limitation of the measurement gap may be ignored within the first time period. It can be learned that the measurement gap overlaps with the transmission of the second data.

In a possible implementation, when the measurement gap overlaps with the transmission of the second data, if the terminal device has obtained the first information, the terminal device generates the transmission of the second data. In an implementation, if the terminal device has obtained the first information, the terminal device does not generate transmission other than the transmission of the second data within the measurement gap.

In another possible implementation, when the measurement gap overlaps with the transmission of the second data, if the terminal device has obtained the second information and the second information is used to indicate to activate the priority-based data transmission or indicate to ignore the limitation of the measurement gap, the terminal device generates the transmission of the second data. In an implementation, if the terminal device has obtained the second information and the second information is used to indicate to activate the priority-based data transmission or ignore the limitation of the measurement gap, the terminal device does not generate transmission other than the transmission of the second data.

In another possible implementation, when the measurement gap overlaps with the transmission of the second data, if the terminal device has obtained the first information and the second information and the second information is used to indicate to activate the first information or indicate to activate the priority-based data transmission or indicate to ignore the limitation of the measurement gap, the terminal device may generate the transmission of the second data. In an implementation, if the terminal device has obtained the first information and the second information and the second information is used to indicate to activate the first information or indicate to activate the priority-based data transmission or indicate to ignore the limitation of the measurement gap, the terminal device does not generate transmission other than the transmission of the second data.

Optionally, the first information is used to indicate that the priority of the first channel is higher than the priority of the measurement gap. When the terminal device needs to perform transmission, if the measurement gap overlaps with the transmission (to be specific, in the overlapping time period between the transmission time period and the measurement gap in the first time period), a physical layer is indicated to generate the transmission when data in a MAC PDU includes data from the first channel, or the physical layer is indicated to generate the transmission when an activation indication is configured, or the physical layer is indicated to generate the transmission when data in a MAC PDU includes data from the first channel and an activation indication is configured.

For example, as shown in FIG. 7, if the first information is used to indicate that priorities of an LCH 1 and an LCH 2 are higher than the priority of the measurement gap, the measurement gap overlaps with the transmission, and the transmission includes transmission of data in the LCH 1 and the LCH 2, the physical layer is indicated to generate the transmission of the data in the LCH 1 and the LCH 2. As shown in FIG. 8, if the first information is used to indicate that priorities of an LCH 1 and an LCH 2 are higher than the priority of the measurement gap, the measurement gap overlaps with the transmission, and the transmission includes transmission of data in an LCH 3 and an LCH 4, the physical layer is indicated not to generate the transmission of the data in the LCH 3 and the LCH 4.

Optionally, the first information is used to indicate that the priority of the first resource is higher than the priority of the measurement gap. When the terminal device needs to perform transmission, if the measurement gap overlaps with the transmission (to be specific, in the overlapping time period between the transmission time period and the measurement gap in the first time period), a physical layer is indicated to generate the transmission when data in a MAC PDU includes data from the first resource, or the physical layer is indicated to generate the transmission when an activation indication is configured, or the physical layer is indicated to generate the transmission when data in a MAC PDU includes data from the first resource and an activation indication is configured.

Further, the first information is used to indicate that the priority of the first resource is higher than the priority of the measurement gap, the first resource has a mapping relationship with the first channel, and the terminal device may map the data in the first channel to the first resource according to an LCP rule. When the terminal device performs transmission, if the measurement gap overlaps with the transmission, the physical layer is indicated to generate transmission related to the first resource.

Certainly, the transmission may alternatively be generated when the priority of the first resource is higher than the priority of the measurement gap and the priority of the first channel is higher than the priority of the measurement gap. If the priority of either the first resource or the first channel is lower than the priority of the measurement gap, the transmission is not generated.

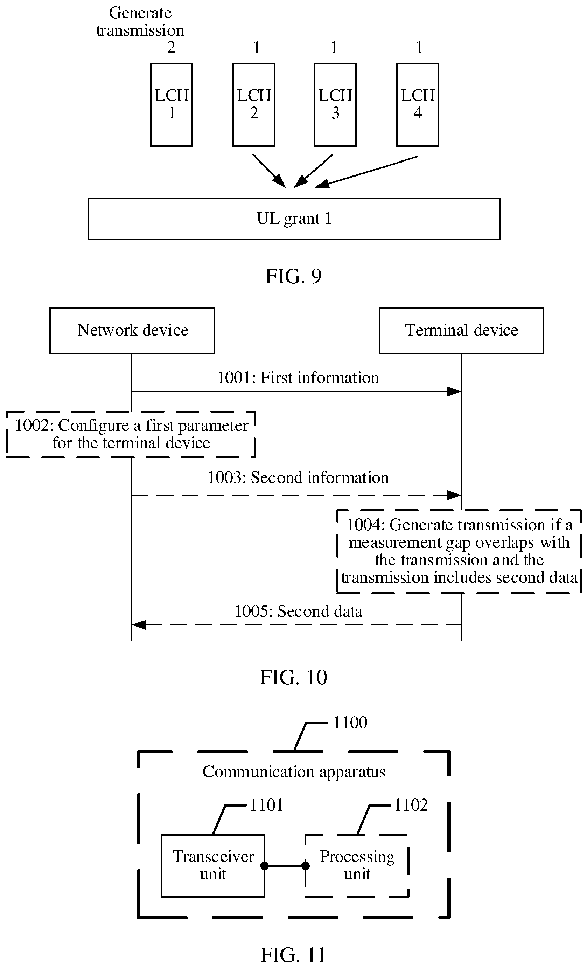

For example, as shown in FIG. 9, if the first information is used to indicate that the priority of the first resource (a UL GRANT 1) is higher than the priority of the measurement gap, the UL GRANT 1 has a mapping relationship with the first channel (an LCH 2, an LCH 3, and an LCH 4), a UL GRANT 2 has a mapping relationship with an LCH 1, and a resource corresponding to transmission is the UL GRANT 1, the physical layer is indicated to generate transmission of data on the UL GRANT 1 and not to generate transmission of data on the UL GRANT 2.

In a second case, the measurement gap overlaps with the transmission of the second data. If a second preset condition is met, the transmission of the second data is not generated.

In this case, the second preset condition is related to one or more of the following: the first information or the second information. For example, the first preset condition includes: the terminal device has not obtained the first information. For another example, the first preset condition includes: the terminal device has not obtained the second information. For another example, the first preset condition includes: the terminal device has not obtained the first information or the second information. For another example, the first preset condition includes: the terminal device has obtained the second information, and the second information is used to indicate to deactivate (or understood as releasing) the priority-based data transmission or indicate that the limitation of the measurement gap cannot be ignored. For another example, the first preset condition includes: the terminal device has obtained the first information and the second information, and the second information is used to indicate to deactivate the first information, or indicate to deactivate the priority-based data transmission, or indicate that the limitation of the measurement gap cannot be ignored. For another example, the first preset condition includes: the terminal device has obtained the first information but has not obtained the second information. In this case, the transmission of the data can be generated only after the second information is obtained to activate the first information, or activate the priority-based data transmission, or ignore the limitation of the measurement gap.

The measurement gap may overlap with the transmission of the second data in a first time period shown in FIG. 6. The first time period includes a transmission time period of the second data and an overlapping time period between the transmission time period of the second data and the measurement gap. Alternatively, this is understood as that the first time period belongs to the transmission time period of the second data.

In a possible implementation, when the measurement gap overlaps with the transmission of the second data, if the terminal device has not obtained the first information, the terminal device does not generate the transmission of the second data.

In another possible implementation, when the measurement gap overlaps with the transmission of the second data, if the terminal device has obtained the second information and the second information is used to indicate to deactivate the priority-based data transmission or indicate that the limitation of the measurement gap cannot be ignored, the terminal device does not generate the transmission of the second data.

In another possible implementation, when the measurement gap overlaps with the transmission of the second data, if the terminal device has obtained the first information and the second information and the second information is used to indicate to deactivate the first information or indicate to deactivate the priority-based data transmission or indicate that the limitation of the measurement gap cannot be ignored, the terminal device does not generate the transmission of the second data.

In another possible implementation, when the measurement gap overlaps with the transmission of the second data, if the terminal device has obtained the first information but has not obtained the second information, the terminal device does not generate the transmission of the second data.

Further, the first resource has a mapping relationship with the first channel. If the priority of either the first resource or the first channel is lower than the priority of the measurement gap, the transmission is not generated.

In a third case, the measurement gap does not overlap with the transmission of the second data. If a second preset condition is met, the transmission of the second data may or may not be generated.

That the measurement gap does not overlap with the transmission of the second data may be understood as that the measurement gap does not overlap with transmission and the transmission includes the second data, or may be understood as that the measurement gap overlaps with transmission and the transmission does not include the second data.

In a case, the measurement gap overlaps with transmission, and the transmission does not include the second data. If the second preset condition is met, the terminal device does not generate the transmission of the second data.

In another case, the measurement gap does not overlap with transmission, and the transmission includes the second data. If the second preset condition is met, the terminal device generates the transmission of the second data.

In this case, the second preset condition is related to one or more of the following: the first information or the second information. For example, the first preset condition includes: the terminal device has not received the first information. For another example, the first preset condition includes: the terminal device has not received the second information. For another example, the first preset condition includes: the terminal device has not received the first information or the second information. For another example, the first preset condition includes: the terminal device has obtained the second information, and the second information is used to indicate to deactivate (or understood as releasing) the priority-based data transmission or indicate that the limitation of the measurement gap cannot be ignored. For another example, the first preset condition includes: the terminal device has obtained the first information and the second information, and the second information is used to indicate to deactivate the first information, or indicate to deactivate the priority-based data transmission, or indicate that the limitation of the measurement gap cannot be ignored.

The measurement gap may not overlap with the transmission of the second data in a second time period shown in FIG. 6. The second time period includes a time period within the measurement gap other than a time period that overlaps with a transmission time period of the second data. Alternatively, this is understood as that the second time period does not belong to the transmission time period of the second data, but belongs to the measurement gap.

In a possible implementation, when the measurement gap does not overlap with the transmission of the second data, if the terminal device has not obtained the first information, the terminal device may or may not generate the transmission of the second data.

In another possible implementation, when the measurement gap does not overlap with the transmission of the second data, if the terminal device has obtained the second information and the second information is used to indicate to deactivate the priority-based data transmission or indicate that the limitation of the measurement gap cannot be ignored, the terminal device may or may not generate the transmission of the second data.

In another possible implementation, when the measurement gap does not overlap with the transmission of the second data, if the terminal device has obtained the first information and the second information and the second information is used to indicate to deactivate the first information or indicate to deactivate the priority-based data transmission or indicate that the limitation of the measurement gap cannot be ignored, the terminal device may or may not generate the transmission of the second data.

Further, the first resource has a mapping relationship with the first channel. If the priority of either the first resource or the first channel is lower than the priority of the measurement gap, the transmission may or may not be generated.

It should be noted that there are a plurality of cases of the communication method provided in the embodiment shown in FIG. 5. For example, the method may include step 501. For another example, the method may include step 502. For another example, the method may include step 501 and step 502. For another example, the method may include step 501 and step 503. For another example, the method may include step 502 and step 503. For another example, the method may include step 501 to step 503.

In this embodiment of this application, the terminal device may determine, based on priority information that is indicated by the first information and that is related to the measurement gap, whether to generate transmission. This can address a conflict between data transmission and the measurement gap. In addition, if the terminal device urgently needs to transmit the second data for a current service, the terminal device may transmit the second data within the measurement gap, to meet a user requirement and improve user experience.

Further, the first information in this embodiment of this application may include two states: an active state and an inactive state. The two states are separately described below.

In a first case, the first information is in the active state.

In this case, after the network device configures the first information for the terminal device, the terminal device may use the first information to complete the priority-based data transmission, where an initial state of the first information or the priority-based data transmission is the active state. Alternatively, this is understood as that, after obtaining the first information, the terminal device may directly use the first information to determine whether to generate transmission.

In a second case, the first information is in the inactive state.

In this case, after the network device configures the first information for the terminal device, the terminal device cannot immediately use the first information to complete the priority-based data transmission, where an initial state of the first information or the priority-based data transmission mechanism is the inactive state. Alternatively, this is understood as that, after obtaining the first information, the terminal device cannot immediately use the first information to determine whether to generate transmission. The terminal device may use the first information to complete the priority-based data transmission only when the second information is subsequently received and the second information indicates to activate the first information or is used to indicate to activate the priority-based data transmission.

There are two possible cases in this case.

In a possible case, the network device preconfigures the first information for the terminal device. Alternatively, this is understood as that the first information is in the inactive state, and cannot be immediately used after being configured. The terminal device needs to determine, by using the subsequently obtained second information, whether to activate the first information.

In another possible case, the first information configured by the network device for the terminal device is in the active state, but the second information obtained by the terminal device indicates to deactivate the first information. Consequently, the first information is currently in the inactive state.

Optionally, a process includes:
The terminal device may send first signaling, where the first signaling is used to request the network device to deactivate/activate the first information or activate/deactivate the priority-based data transmission.

In this case, the terminal device may determine, based on a specific condition, whether to send the first signaling, and determining is performed based on the condition, the measurement gap, a data transmission status. For example, after a quantity of times that the measurement gap overlaps with data transmission exceeds a threshold, the first signaling is sent. Alternatively, when measurement gap overlaps with data transmission, or when the terminal device predetermines whether the measurement gap is to overlap with data transmission or whether a quantity of times of overlapping is to exceed the threshold, the terminal device sends the first signaling.

A manner of obtaining the second information by the terminal device is based on a request of the terminal device.

Further, the terminal device may request the network device to activate the first information again. Alternatively, this is understood that the terminal device may send request information to the network device, where the request information is used to request to activate the first information or activate the priority-based data transmission. After receiving the request information, the network device delivers the second information again, and the second information indicates to activate the first information or activate the priority-based data transmission. In this way, the terminal device may complete the priority-based data transmission based on the second information and the first information.

The foregoing describes the communication method provided in embodiments of this application from a perspective of the network device or the terminal device. The following describes a communication method provided in embodiments of this application from a perspective of interaction between a network device and a terminal device.

FIG. 10 is a schematic flowchart of a communication method according to an embodiment of this application. The method may include step 1001 to step 1005. The method may be performed by a terminal device and a network device, or may be performed by a component (for example, a processor, a chip, or a chip system) of a terminal device and a component (for example, a processor, a chip, or a chip system) of a network device. Step 1001 to step 1005 are described in detail below.

Step 1001: The network device sends first information to the terminal device.

The network device sends the first information to the terminal device. Correspondingly, the terminal device receives the first information sent by the network device.

For descriptions of the first information, refer to the descriptions in the embodiments shown in FIG. 2 to FIG. 9. Details are not described herein again.

Step 1002: The network device configures a first parameter for the terminal device. This step is optional.

Optionally, the network device configures the first parameter for the terminal device. The configuration process may be preconfigured, or may be configured by transmitting the first parameter. This is not specifically limited herein.

Further, the network device sends the first parameter to the terminal device. Correspondingly, the terminal device receives the first parameter sent by the network device.

For descriptions of the first parameter, refer to the descriptions in the embodiments shown in FIG. 2 to FIG. 9. Details are not described herein again.

Step 1003: The network device sends second information to the terminal device. This step is optional.

Optionally, the network device sends the second information to the terminal device. Correspondingly, the terminal device receives the second information sent by the network device.

For descriptions of the second information, refer to the descriptions in the embodiments shown in FIG. 3 to FIG. 9. Details are not described herein again.

Step 1004: The terminal device generates transmission if a measurement gap overlaps with transmission and the transmission includes second data. This step is optional.

Optionally, the terminal device generates the transmission if the measurement gap overlaps with the transmission and the transmission includes the second data.

For descriptions of a process of generating the transmission, refer to the descriptions in the embodiments shown in FIG. 5 to FIG. 9. Details are not described herein again.

Step 1005: The terminal device sends the second data to the network device. This step is optional.

Optionally, the terminal device sends the second data to the network device. Correspondingly, the network device receives the second data sent by the terminal device.

It should be noted that there are a plurality of cases of the communication method provided in the embodiment shown in FIG. 10. For example, the method may include step 1001 and step 1002. For another example, the method may include step 1001 and step 1003. For another example, the method may include step 1001 and step 1004. For another example, the method may include step 1001, step 1004, and step 1005. For another example, the method may include step 1001 to step 1003. For another example, the method may include step 1001, step 1002, step 1004, and step 1005. For another example, the method may include step 1001, step 1003 to step 1005, and the like. This is not specifically limited herein.

In this embodiment of this application, the network device may schedule, by using the first information and/or the second information, whether the terminal device is to transmit data within the measurement gap, to control data transmission of terminal devices. In addition, the network device may receive the second data sent by the terminal device within the measurement gap. That is, the measurement gap does not affect transmission of the second data. This can address a conflict between data transmission and the measurement gap. In addition, the terminal device may determine, based on the first information and/or the second information, whether to generate the transmission of the second data. If the terminal device urgently needs to transmit the second data for a current service, the terminal device may transmit the second data within the measurement gap, to meet a user requirement improve user experience.

The foregoing describes the communication method in embodiments of this application. The following describes a communication apparatus in embodiments of this application. FIG. 11 shows an embodiment of a communication apparatus 1100 in embodiments of this application. The communication apparatus 1100 may implement functions of a communication apparatus (the communication apparatus is a network device or a terminal device) in the foregoing method embodiments, and therefore can also achieve the beneficial effects of the foregoing method embodiments. In this embodiment of this application, the communication apparatus 1100 may be a communication apparatus, or may be an integrated circuit or a component, for example, a chip, inside a communication apparatus. The communication apparatus 1100 includes a transceiver unit 1101. Optionally, the communication apparatus 1100 may further include a processing unit 1102.

In a possible implementation, the communication apparatus 1100 is the network device in the embodiments shown in FIG. 1A to FIG. 10. In this case, functions of the units are as follows:

The transceiver unit 1101 is configured to send first information, where the first information is used to indicate one or more of the following: a priority of first data is higher than a priority of a measurement gap, a priority of a first channel is higher than the priority of the measurement gap, or a priority of a first resource is higher than the priority of the measurement gap.

Optionally, the transceiver unit 1101 is further configured to receive second data, where a sending moment of the second data is within the measurement gap, and the second data satisfies one or more of the following: the second data is the first data, the second data is data in the first channel, or the second data is data on the first resource.

Optionally, the transceiver unit 1101 is further configured to send second information, where the second information is used to indicate to activate or release the first information, or indicate to activate/release priority-based data transmission, or indicate to activate/release a limitation of the measurement gap.

Optionally, the first information is specifically used to indicate that the priority of the first data is higher than the priority of the measurement gap, and the first data is data transmitted through a second channel and/or a second resource. The processing unit 1102 is configured to configure a first parameter for the terminal device, where the first parameter is used to indicate the second channel and/or the second resource. Certainly, alternatively, the transceiver unit 1101 may be further configured to configure the first parameter for the terminal device.

In this embodiment, the operations performed by the units in the communication apparatus are similar to the descriptions of the network device in the embodiments shown in FIG. 1A to FIG. 10. Details are not described herein again.

In this embodiment, the transceiver unit 1101 may schedule, by using the first information and/or the second information, whether the terminal device is to transmit data within the measurement gap, to control data transmission of terminal devices. In addition, the transceiver unit 1101 may receive the second data sent by the terminal device within the measurement gap. That is, the measurement gap does not affect transmission of the second data. This can address a conflict between data transmission and the measurement gap. In addition, if the terminal device urgently needs to transmit the second data for a current service, the terminal device may transmit the second data within the measurement gap, to meet a user requirement and improve user experience.

In another possible implementation, the communication apparatus 1100 is the network device in the embodiment shown in FIG. 3 or FIG. 4. In this case, functions of the units are as follows:

The transceiver unit 1101 is configured to send second information, where the second information is used to indicate to activate/release priority-based data transmission, or indicate to activate/release a limitation of a measurement gap.

Optionally, the transceiver unit 1101 is further configured to receive second data, where the second data satisfies one or more of the following: a priority of the second data is higher than the priority of the measurement gap, a priority of a channel used for the second data is higher than the priority of the measurement gap, or a priority of a resource used for the second data is higher than the priority of the measurement gap.

In this embodiment, the operations performed by the units in the communication apparatus are similar to the descriptions of the network device in the embodiment shown in FIG. 3 or FIG. 4. Details are not described herein again.

In this embodiment, the transceiver unit 1101, to a terminal device, the second information related to a priority of the measurement gap, so that the terminal device can determine a priority based on the second information, to implement data transmission, to address a conflict between the data transmission and the measurement gap.

In another possible implementation, the communication apparatus 1100 is the terminal device in the embodiments shown in FIG. 1A to FIG. 10. In this case, functions of the units are as follows:

The transceiver unit 1101 is configured to obtain first information, where the first information is used to indicate one or more of the following: a priority of first data is higher than a priority of a measurement gap, a priority of a first channel is higher than the priority of the measurement gap, or a priority of a first resource is higher than the priority of the measurement gap.

Optionally, the transceiver unit 1101 is further configured to obtain second information, where the second information is used to indicate to activate or release the first information, or indicate to activate/release priority-based data transmission, or indicate to activate/release a limitation of the measurement gap.

Optionally, the transceiver unit 1101 is further configured to generate transmission if the measurement gap overlaps with the transmission and the transmission includes second data, where
the second data satisfies one or more of the following: the second data includes the first data, the second data includes data in the first channel, or the second data includes data on the first resource.

Optionally, the first information is specifically used to indicate that the priority of the first data is higher than the priority of the measurement gap, and the first data is data transmitted through a second channel and/or a second resource. The obtaining unit 1101 is configured to obtain a first parameter, where the first parameter is used to indicate the second channel and/or the second resource. Certainly, alternatively, the processing unit 1102 may be further configured to obtain the first parameter.

It can be understood that an example in which the obtaining action is performed by the transceiver unit 1101 is merely used for description. During actual application, the obtaining action may alternatively be performed by the processing unit 1102, or may be performed by both the processing unit 1102 and the transceiver unit 1101. This is not specifically limited herein.

In this embodiment, the operations performed by the units in the communication apparatus are similar to the descriptions of the terminal device in the embodiments shown in FIG. 1A to FIG. 10. Details are not described herein again.

In this embodiment, the transceiver unit 1101 may determine, based on priority information that is indicated by the first information and that is related to the measurement gap, whether to generate transmission. This can address a conflict between data transmission and the measurement gap. In addition, if the terminal device urgently needs to transmit the second data for a current service, the transceiver unit 1101 may transmit the second data within the measurement gap, to meet a user requirement and improve user experience.

In another possible implementation, the communication apparatus 1100 is the terminal device in the embodiments shown in FIG. 5 to FIG. 10. In this case, functions of the units are as follows:

The transceiver unit 1101 is configured to send second information, where the second information is used to indicate to activate/release priority-based data transmission, or indicate to activate/release a limitation of a measurement gap.

Optionally, the transceiver unit 1101 is further configured to receive second data, where the second data satisfies one or more of the following: a priority of the second data is higher than the priority of the measurement gap, a priority of a channel used for the second data is higher than the priority of the measurement gap, or a priority of a resource used for the second data is higher than the priority of the measurement gap.

In this embodiment, the operations performed by the units in the communication apparatus are similar to the descriptions of the terminal device in the embodiments shown in FIG. 5 to FIG. 10. Details are not described herein again.

In this embodiment, the transceiver unit 1101 obtains the second information related to the priority of the measurement gap, so that the terminal device can determine a priority based on the second information, to implement data transmission, to address a conflict between the data transmission and the measurement gap.

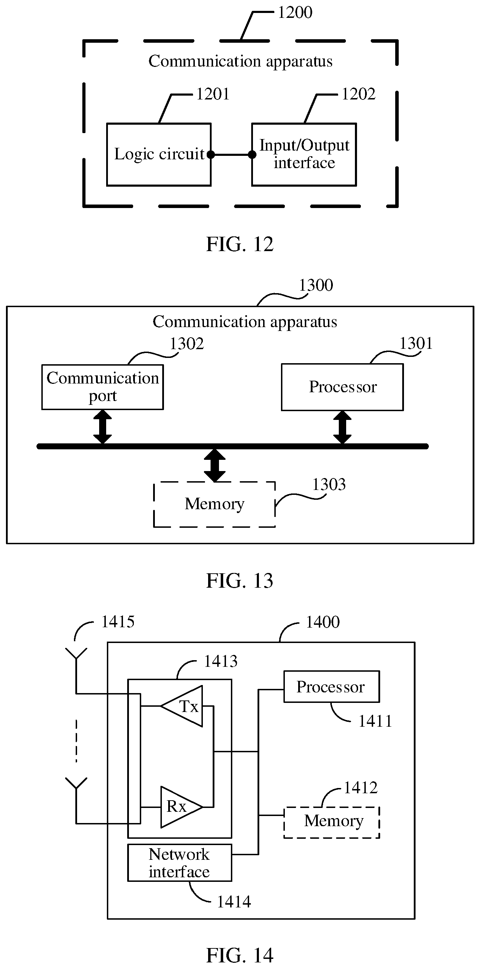

FIG. 12 is another diagram of a structure of a communication apparatus 1200 according to this application. The communication apparatus 1200 includes a logic circuit 1201 and an input/output interface 1202. The communication apparatus 1200 may be a chip or an integrated circuit.

The transceiver unit 1101 shown in FIG. 11 may be a communication interface. The communication interface may be the input/output interface 1202 in FIG. 12, and the input/output interface 1202 may include an input interface and an output interface. Alternatively, the communication interface may be a transceiver circuit, and the transceiver circuit may include an input interface circuit and an output interface circuit. The processing unit 1102 shown in FIG. 11 may be the logic circuit 1201 in FIG. 12.

Optionally, when the communication apparatus is the network device in the foregoing embodiments, the logic circuit 1201 is configured to configure one or more of the following for a terminal device: first information, second information, or a first parameter. The input/output interface 1202 is configured to perform one or more of the following: sending the first information, sending the second information, sending the second parameter, and receiving second data.

Optionally, when the communication apparatus is the terminal device in the foregoing embodiments, the logic circuit 1201 is configured to obtain one or more of the following: first information, second information, or a first parameter. The input/output interface 1202 is configured to perform one or more of the following: receiving the first information, receiving the second information, receiving the second parameter, and sending second data.

The logic circuit 1201 and the input/output interface 1202 may alternatively perform other steps performed by the terminal device or the network device in any embodiment, and achieve corresponding beneficial effects. Details are not described herein again.

Optionally, the logic circuit 1201 may be a processing apparatus. A part or all of functions of the processing apparatus may be implemented by software. A part or all of functions of the processing apparatus may be implemented by software.

Optionally, the processing apparatus may include a memory and a processor. The memory is configured to store a computer program, and the processor reads and executes the computer program stored in the memory, to perform corresponding processing and/or steps in any one of the method embodiments.

Optionally, the processing apparatus may include only a processor. A memory for storing a computer program is located outside the processing apparatus, and the processor is connected to the memory through a circuit/wire, to read and execute the computer program stored in the memory. The memory and the processor may be integrated together, or may be physically independent of each other.

Optionally, the processing apparatus may be one or more chips, or one or more integrated circuits. For example, the processing apparatus may be one or more field programmable gate arrays (field-programmable gate array, FPGA), an application-specific integrated chip (application specific integrated circuit, ASIC), a system on chip (system on chip, SoC), a central processing unit (central processor unit, CPU), a network processor (network processor, NP), a digital signal processing circuit (digital signal processor, DSP), a microcontroller (micro controller unit, MCU), a programmable controller (programmable logic device, PLD), or another integrated chip, or any combination of the foregoing chips or processors.

FIG. 13 shows a communication apparatus 1300 used in the foregoing embodiments according to an embodiment of this application. The communication apparatus 1300 may be specifically a communication apparatus serving as a terminal device in the foregoing embodiments.

In a diagram of a possible logical structure of the communication apparatus 1300, the communication apparatus 1300 may include but is not limited to at least one processor 1301 and a communication port 1302.

The transceiver unit 1101 shown in FIG. 11 may be a communication interface. The communication interface may be the communication port 1302 in FIG. 13. The communication port 1302 may include an input interface and an output interface. Alternatively, the communication port 1302 may be a transceiver circuit, and the transceiver circuit may include an input interface circuit and an output interface circuit.

Further, optionally, the apparatus may further include at least one of a memory 1303 and a bus. In this embodiment of this application, the at least one processor 1301 is configured to control an action of the communication apparatus 1300.

In addition, the processor 1301 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors for implementing a computing function, for example, a combination of one or more microprocessors, or a combination of a digital signal processor and a microprocessor. It can be clearly understood by a person skilled in the art that, for ease and brevity of description, for detailed working processes of the foregoing systems, apparatuses, and units, reference may be made to corresponding processes in the foregoing method embodiments. Details are not described herein again.

It should be noted that the communication apparatus 1300 shown in FIG. 13 may be specifically configured to implement the steps implemented by the terminal device in the foregoing method embodiments, and achieve the technical effects corresponding to the terminal device. For a specific implementation of the communication apparatus shown in FIG. 13, refer to the descriptions in the foregoing method embodiments. Details are not described herein again.

FIG. 14 is a diagram of a structure of a communication apparatus 1400 used in the foregoing embodiments according to an embodiment of this application. The communication apparatus 1400 may be specifically a communication apparatus serving as a network device in the foregoing embodiments. For a structure of the communication apparatus, refer to the structure shown in FIG. 14.

The communication apparatus 1400 includes at least one processor 1411 and at least one network interface 1414. Further, optionally, the communication apparatus further includes at least one memory 1412, at least one transceiver 1413, and one or more antennas 1415. The processor 1411, the memory 1412, the transceiver 1413, and the network interface 1414 are connected, for example, connected through a bus. In this embodiment of this application, the connection may include various interfaces, transmission lines, buses, or the like. This is not limited in this embodiment. The antenna 1415 is connected to the transceiver 1413. The network interface 1414 is configured to enable the communication apparatus to communicate with another communication device through a communication link. For example, the network interface 1414 may include a network interface between the communication apparatus and a core network device, for example, an S1 interface. The network interface may include a network interface between the communication apparatus and another communication apparatus (for example, another network device or core network device), for example, an X2 or Xn interface.

The transceiver unit 1101 shown in FIG. 11 may be a communication interface. The communication interface may be the network interface 1414 in FIG. 14. The network interface 1414 may include an input interface and an output interface. Alternatively, the network interface 1414 may be a transceiver circuit, and the transceiver circuit may include an input interface circuit and an output interface circuit.

The processor 1411 is mainly configured to process a communication protocol and communication data, control the entire communication apparatus, execute a software program, and process data of the software program, for example, is configured to support the communication apparatus in performing actions described in embodiments. The communication apparatus may include a baseband processor and a central processing unit. The baseband processor is mainly configured to process the communication protocol and the communication data. The central processing unit is mainly configured to control the entire communication apparatus, execute the software program, and process the data of the software program. Functions of the baseband processor and the central processing unit may be integrated into the processor 1411 in FIG. 14. A person skilled in the art can understand that the baseband processor and the central processing unit may alternatively be processors independent of each other, and are interconnected through a technology like a bus. A person skilled in the art can understand that the communication apparatus may include a plurality of baseband processors to adapt to different network standards, the communication apparatus may include a plurality of central processing units to enhance a processing capability of the communication apparatus, and components of the communication apparatus may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program, and the processor executes the software program to implement a baseband processing function.

The memory is mainly configured to store a software program and data. The memory 1412 may exist independently, and is connected to the processor 1411. Optionally, the memory 1412 and the processor 1411 may be integrated together, for example, integrated into one chip. The memory 1412 can store program code for performing the technical solutions in embodiments of this application, and execution of the program code is controlled by the processor 1411. Various types of executed computer program code may also be considered as a driver of the processor 1411.

FIG. 14 shows only one memory and one processor. An actual communication apparatus may include a plurality of processors and a plurality of memories. The memory may also be referred to as a storage medium, a storage device, or the like. The memory may be a storage element on a same chip as the processor, that is, an on-chip storage element, or may be an independent storage element. This is not limited in this embodiment of this application.

The transceiver 1413 may be configured to support receiving or sending of a radio frequency signal between the communication apparatus and a terminal. The transceiver 1413 may be connected to the antenna 1415. The transceiver 1413 includes a transmitter Tx and a receiver Rx. Specifically, the one or more antennas 1415 may receive a radio frequency signal. The receiver Rx of the transceiver 1413 is configured to receive the radio frequency signal from the antenna, convert the radio frequency signal into a digital baseband signal or a digital intermediate frequency signal, and provide the digital baseband signal or the digital intermediate frequency signal for the processor 1411, so that the processor 1411 further processes the digital baseband signal or the digital intermediate frequency signal, for example, performs demodulation and decoding. In addition, the transmitter Tx of the transceiver 1413 is further configured to receive a modulated digital baseband signal or digital intermediate frequency signal from the processor 1411, convert the modulated digital baseband signal or digital intermediate frequency signal into a radio frequency signal, and send the radio frequency signal through the one or more antennas 1415. Specifically, the receiver Rx may selectively perform one-level or multi-level down frequency mixing and analog-to-digital conversion on the radio frequency signal to obtain the digital baseband signal or the digital intermediate frequency signal. An order of the down frequency mixing and the analog-to-digital conversion is adjustable. The transmitter Tx may selectively perform one-level or multi-level up frequency mixing and digital-to-analog conversion on the modulated digital baseband signal or digital intermediate frequency signal to obtain the radio frequency signal. An order of the up frequency mixing and the digital-to-analog conversion is adjustable. The digital baseband signal and the digital intermediate frequency signal may be collectively referred to as a digital signal.

The transceiver 1413 may also be referred to as a transceiver unit, a transceiver device, a transceiver apparatus, or the like. Optionally, a component that is in the transceiver unit and that is configured to implement a receiving function may be considered as a receiving unit, and a component that is in the transceiver unit and that is configured to implement a sending function may be considered as a sending unit. That is, the transceiver unit includes the receiving unit and the sending unit. The receiving unit may also be referred to as a receiver, an input interface, a receiver circuit, or the like. The sending unit may be referred to as a transmitting device, a transmitter, a transmitter circuit, or the like.

It should be noted that the communication apparatus 1400 shown in FIG. 14 may be specifically configured to implement the steps implemented by the network device in the foregoing method embodiments, and achieve the technical effects corresponding to the network device. For a specific implementation of the communication apparatus 1400 shown in FIG. 14, refer to the descriptions in the foregoing method embodiments. Details are not described herein again.

An embodiment of this application further provides a computer-readable storage medium. The storage medium is configured to store one or more computer-executable instructions. When the computer-executable instructions are executed by a processor, the processor performs the method according to the possible implementations of the terminal device or the network device in the foregoing embodiments.

An embodiment of this application further provides a computer program product (or referred to as a computer program). When the computer program product is executed by a processor, the processor performs the method according to the foregoing possible implementations of the terminal device or the network device.

An embodiment of this application further provides a chip system. The chip system includes at least one processor, configured to support a communication apparatus in implementing the functions in the foregoing possible implementations of the communication apparatus. Optionally, the chip system further includes an interface circuit, and the interface circuit provides program instructions and/or data for the at least one processor. In a possible design, the chip system may further include a memory. The memory is configured to store program instructions and data that are necessary for the communication apparatus. The chip system may include a chip, or may include a chip and another discrete component. The communication apparatus may be specifically the terminal device or the network device in the foregoing method embodiments.

An embodiment of this application further provides a communication system. The communication system includes the terminal device and the network device in any one of the foregoing embodiments.

In the several embodiments provided in this application, it should be understood that the disclosed systems, apparatuses, and methods may be implemented in other manners. For example, the described apparatus embodiments are merely examples. For example, division into the units is merely logical function division. During actual implementation, another division manner may be used. For example, a plurality of units or components may be combined or integrated into another system, or some features may be ignored or not performed. In addition, the shown or discussed mutual couplings, direct couplings, or communication connections may be implemented through some interfaces. The indirect couplings or communication connections between the apparatuses or units may be implemented in an electrical form, a mechanical form, or other forms.

In embodiments of this application, unless otherwise specified or a logic conflict occurs, terms and/or descriptions in different embodiments are consistent and may be mutually referenced, and technical features in different embodiments may be combined into a new embodiment based on an internal logical relationship between the technical features.

## Claims

1. A communication method, wherein the method is applied to a network device, and the method comprises:
sending first information, wherein the first information is used to indicate one or more of the following: a priority of first data is higher than a priority of a measurement gap, a priority of a first channel is higher than the priority of the measurement gap, or a priority of a first resource is higher than the priority of the measurement gap.

2. The method according to claim 1, wherein the method further comprises:
receiving second data, wherein a sending moment of the second data is within the measurement gap, wherein
the second data satisfies one or more of the following: the second data is the first data, the second data is data in the first channel, or the second data is data on the first resource.

3. The method according to claim 1 or 2, wherein the method further comprises:
sending second information, wherein the second information is used to indicate to activate/release the first information, or indicate to activate/release priority-based data transmission, or indicate to activate/release a limitation of the measurement gap.

4. The method according to any one of claims 1 to 3, wherein the first information is specifically used to indicate that the priority of the first channel and/or the priority of the first resource are/is higher than the priority of the measurement gap; and the first information specifically indicates the first channel and/or the first resource in a first manner, the first manner comprises one or more of the following: a bit mapping manner, an identifier indication manner, or an indication information manner, and the indication information manner comprises an enumeration manner or a Boolean format.

5. The method according to claim 4, wherein the first information specifically indicates the first channel in the bit mapping manner, the first information comprises N bits, the first channel comprises N channels, the N bits are respectively in a one-to-one correspondence with the N channels, a priority of a channel corresponding to a bit among the N bits that is a first value is higher than the priority of the measurement gap, a priority of a channel corresponding to a bit among the N bits that is a second value is lower than the priority of the measurement gap, and N is an integer greater than 0.

6. The method according to claim 4 or 5, wherein the first information specifically indicates the first resource in the bit mapping manner, the first information comprises M bits, the first resource comprises M resources, the M bits are respectively in a one-to-one correspondence with the M resources, a priority of a resource corresponding to a bit among the M bits that is a third value is higher than the priority of the measurement gap, a priority of a resource corresponding to a bit among the M bits that is a fourth value is lower than the priority of the measurement gap, and M is an integer greater than 0.

7. The method according to any one of claims 4 to 6, wherein the first information specifically indicates the first channel in the identifier indication manner, the first information comprises an identifier of the first channel, and a priority of a first channel corresponding to the identifier of the first channel is higher than the priority of the measurement gap.

8. The method according to any one of claims 4 to 7, wherein the first information specifically indicates the first resource in the identifier indication manner, the first information comprises an identifier of the first resource, and a priority of a first resource corresponding to the identifier of the first resource is higher than the priority of the measurement gap.

9. The method according to any one of claims 1 to 8, wherein a type of the first information comprises a retention type or a release type, the retention type is used for the terminal device to save the first information when a field related to the first information does not exist, and the release type is used for the terminal device to release the first information when a field related to the first information does not exist.

10. The method according to any one of claims 1 to 9, wherein the first information is configured in configuration information of the first resource.

11. The method according to any one of claims 1 to 10, wherein the first channel has a mapping relationship with the first resource.

12. The method according to any one of claims 1 to 11, wherein the first channel comprises one or more of the following: a logical channel, a protocol data unit PDU set, a radio bearer RB, or a quality of service QoS flow; and the first resource comprises one or more of the following: an uplink resource or a downlink resource.

13. The method according to any one of claims 1 to 3, wherein the first information is specifically used to indicate that the priority of the first data is higher than the priority of the measurement gap, and the first data is data transmitted through a second channel and/or a second resource; and
the method further comprises:
configuring a first parameter for a terminal device, wherein the first parameter is used to indicate the second channel and/or the second resource.

14. The method according to claim 13, wherein the first parameter specifically indicates the second channel and/or the second resource in a first manner, the first manner comprises one or more of the following: a bit mapping manner, an identifier indication manner, or an indication information manner, and the indication information manner comprises an enumeration manner or a Boolean format.

15. The method according to claim 14, wherein the first parameter specifically indicates the second channel in the bit mapping manner, the first parameter comprises N bits, the second channel comprises N channels, the N bits are respectively in a one-to-one correspondence with the N channels, a priority of first data in a channel corresponding to a bit among the N bits that is a first value is higher than the priority of the measurement gap, a priority of first data in a channel corresponding to a bit among the N bits that is a second value is lower than the priority of the measurement gap, and N is an integer greater than 0.

16. The method according to claim 14 or 15, wherein the first parameter specifically indicates the second resource in the bit mapping manner, the first parameter comprises M bits, the second resource comprises M resources, the M bits are respectively in a one-to-one correspondence with the M resources, a priority of first data on a resource corresponding to a bit among the M bits that is a third value is higher than the priority of the measurement gap, a priority of first data on a resource corresponding to a bit among the M bits that is a fourth value is lower than the priority of the measurement gap, and M is an integer greater than 0.

17. The method according to any one of claims 11 to 16, wherein the second channel has a mapping relationship with the second resource.

18. The method according to any one of claims 11 to 17, wherein the second channel comprises one or more of the following: a logical channel, a protocol data unit PDU set, a radio bearer RB, or a quality of service QoS flow; and the second resource comprises one or more of the following: an uplink resource or a downlink resource.

19. A communication method, wherein the method is applied to a terminal device, and the method comprises:
obtaining first information, wherein the first information is used to indicate one or more of the following: a priority of first data is higher than a priority of a measurement gap, a priority of a first channel is higher than the priority of the measurement gap, or a priority of a first resource is higher than the priority of the measurement gap.

20. The method according to claim 19, wherein the method further comprises:
obtaining second information, wherein the second information is used to indicate to activate or release the first information, or indicate to activate/release priority-based data transmission, or indicate to activate/release a limitation of the measurement gap.

21. The method according to claim 19 or 20, wherein the method further comprises:
generating transmission if the measurement gap overlaps with the transmission and the transmission comprises second data, wherein
the second data satisfies one or more of the following: the second data comprises the first data, the second data comprises data in the first channel, or the second data comprises data on the first resource.

22. A communication method, wherein the method is applied to a network device, and the method comprises:
sending second information, wherein the second information is used to indicate to activate/release priority-based data transmission, or indicate to activate/release a limitation of a measurement gap.

23. A communication method, wherein the method is applied to a terminal device, and the method comprises:
obtaining second information, wherein the second information is used to indicate to activate/release priority-based data transmission, or indicate to activate/release a limitation of a measurement gap.

24. A communication apparatus, comprising a processing unit and a transceiver unit, wherein
the processing unit and the transceiver unit are configured to perform the method according to any one of claims 1 to 23.

25. A communication apparatus, comprising a logic circuit and an input/output interface, wherein
the logic circuit and the input/output interface are configured to perform the method according to any one of claims 1 to 23.

26. A communication apparatus, configured to implement the method according to any one of claims 1 to 18 or claim 22.

27. The communication apparatus according to claim 26, wherein the communication apparatus comprises a network device or a chip.

28. A communication apparatus, configured to implement the method according to any one of claims 19 to 21 or claim 23.

29. The communication apparatus according to claim 28, wherein the communication apparatus comprises a terminal device or a chip.

30. A communication system, comprising the communication apparatus according to claim 26 and the communication apparatus according to claim 28, or comprising the communication apparatus according to claim 27 and the communication apparatus according to claim 29.

31. A readable storage medium, wherein the storage medium stores a computer program or instructions, and when the computer program or the instructions are executed by a communication apparatus, the method according to any one of claims 1 to 23 is implemented.

32. A computer program product, comprising instructions, wherein when instructions are run on a computer, the computer is enabled to perform the method according to any one of claims 1 to 23.
